(19) Europäisches Patentamt / European Patent Office / Office européen des brevets

(11) **EP 3 346 228 B1**

(12) **EUROPEAN PATENT SPECIFICATION**

(45) Date of publication and mention
of the grant of the patent:
**04.12.2019 Bulletin 2019/49**

(51) Int Cl.:
**G01B 5/20** (2006.01)     **G01B 5/28** (2006.01)

(21) Application number: **17190580.5**

(22) Date of filing: **25.04.2014**

(54) **SHAPE MEASUREMENT DEVICE**

FORMMESSVORRICHTUNG

DISPOSITIF DE MESURE DE FORME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2013   JP 2013093481**

(43) Date of publication of application:
**11.07.2018   Bulletin 2018/28**

(62) Document number(s) of the earlier application(s) in
accordance with Art. 76 EPC:
**14787627.0 / 2 990 754**

(73) Proprietor: **Tokyo Seimitsu Co., Ltd.
Tokyo 192-8515 (JP)**

(72) Inventors:
• **YAMAUCHI, Yasuhiro
Tokyo, 192-8515 (JP)**
• **FUJITA, Takashi
Tokyo, 192-8515 (JP)**

(74) Representative: **Dennemeyer & Associates S.A.
Postfach 70 04 25
81304 München (DE)**

(56) References cited:
**WO-A1-2013/103070     DE-A1-102007 019 833
JP-A- S6 125 009        US-A1- 2004 027 141
US-A1- 2012 234 075**

EP 3 346 228 B1

**Description**

TECHNICAL FIELD

The present invention relates to a shape measuring machine for measuring the shape of a to-be-measured object, and particularly relates to a shape measuring machine that can measure both a contour shape and surface roughness.

BACKGROUND ART

Surface shape measuring machines are conventionally used to measure the surface shape of a to-be-measured object. There are two types of surface shape measuring machines including: a contact type that measures the surface shape of a to-be-measured object in contact with the to-be-measured object; and a non-contact type that measures the surface shape of a to-be-measured object in no-contact with the to-be-measured object.

Examples of the contact type include one that brings a stylus attached to an arm that swings into contact with a surface of a to-be-measured object and measures movements of the arm made by the stylus moving up and down along projections and depressions to measure the uneven shape of the surface of the to-be-measured object.

A displacement sensor that can detect minute movements of the arm with high accuracy is used to measure minute irregularities in a minute area on the surface of the to-be-measured object. Examples of the displacement sensor include a differential transformer type that electrically detects a change in insertion amount of a core inserted into a coil, a capacitive type that detects a change in capacitance in accordance with the movement of a probe, and an eddy-current type that detects a change in impedance caused by an eddy current generated in a target object when bringing a coil producing a high-frequency magnetic field close to the target object.

Such displacement sensors are suitable to measure minute irregularities in a minute area with high accuracy. However, such displacement sensors have poor linearity in a wide detection range; accordingly, the displacement sensors are not suitable to measure the entire shape of a relatively large area.

Hence, scale detectors and the like are used to measure the entire shape of a relatively large area of a to-be-measured object. The scale detector includes a scale with graduations, and electrical, magnetic, or optical means for reading the graduation. The scale detectors are suitable to measure the entire shape of a relatively large area. However, the scale detectors have difficulty in measuring minute irregularities with high accuracy.

Hence, a shape measuring machine disclosed in Patent Literature 1 includes both a displacement sensor and a scale detector to be able to measure minute irregularities in a minute area with high accuracy and also measure the entire shape of a relatively large area.

The shape measuring machine disclosed in Patent Literature 1 includes a support provided in such a manner as to be movable up and down with respect to a fixed portion, a lever pivotally and swingably supported by the support, and provided at one end with a stylus and a digital detector, and at the other end with an analog detector, and a servo mechanism that moves the support up and down in accordance with output from the analog detector. Consequently, wide-range measurement can be conducted.

The "support" in Patent Literature 1 corresponds to a "support unit" in the present invention, the "lever" to an "arm" in the present invention, the analog detector to a displacement sensor in the present invention, and the digital detector to a scale detector in the present invention.

Patent Literature 2 discloses a contour and surface texture measuring instrument, and Patent Literatures 3-5 disclose a method of calibrating a surface texture measurement device, a measuring head and particularly to a seesaw type measuring head which is used in a machine control gauge, a surface roughness, and contour shape measuring apparatus, and a touch probe for measuring a surface of a workpiece, respectively.

CITATION LIST

PATENT LITERATURE

Patent Literature 1: JP-B-4-1850
Patent Literature 2: WO 2013/103070
Patent Literature 3: US 2012/234075
Patent Literature 4: US 2004/027141
Patent Literature 5: DE 10 2007 019833

## SUMMARY OF THE INVENTION

### PROBLEMS TO BE SOLVED BY THE INVENTION

However, the known shape measuring machine described in Patent Literature 1 is equipped with a digital scale near the stylus on the arm. Hence, the weight of the digital scale is added to the stylus; accordingly, the stylus has not good trackability of irregularities.

Moreover, in the known shape measuring machine described in Patent Literature 1, the support is moved up and down by the servo mechanism; accordingly, the apparatus becomes complicated and its cost is high.

Moreover, in Patent Literature 1, the analog detector (a differential transformer type displacement measuring mechanism) detects a displacement of the arm having the stylus at one end. However, its detection signal is used for a servo signal for moving the support of the arm up and down to make the contact pressure of the stylus on a work surface constant. The analog detector does not measure the stylus's displacement itself. Moreover, the digital detector including the digital scale (a scale type displacement measuring mechanism) detects a displacement of the stylus and does not detect a displacement of the arm. In this manner, Patent Literature 1 does not disclose simultaneous measurements of a displacement of a gauge head by measuring a displacement of the arm with both the differential transformer type displacement measuring mechanism and the scale type displacement measuring mechanism.

Hence, this is not for measuring a contour shape accurately and correctly in a wide measurement range and also measuring a minutely uneven shape with high responsivity and high resolution.

Considering the above circumstances, the present invention is to provide a shape measuring machine that can measure both a contour shape of a wide measurement range and a minutely uneven shape, allows a stylus to have excellent trackability of minute irregularities, and can keep the cost low.

### SOLUTIONS TO THE PROBLEMS

The problem of the present invention can be solved by the following invention.

In other words, a shape measuring machine of the present invention is a shape measuring machine that measures the contour shape of a surface of a to-be-measured object and surface roughness, and has main features in including an arm configured to rotate with a support unit as a fulcrum, and a stylus configured to be brought into contact with the to-be-measured object, be displaced up and down following the surface shape of the to-be-measured object, and be mounted at one end of the arm, and, further including, in the arm, a displacement sensor and a scale detector to detect the displacement of the arm caused by the swing.

It is noted that the invention is defined by the exact wording of independent claim 1.

Consequently, neither the displacement sensor nor the scale detector is mounted at one end where the stylus is mounted, out of both ends of the arm. Hence, their weights are not added to the stylus, and the stylus has improved trackability of irregularities.

Moreover, it is possible to obtain a measurement result in a wide range with highly accurate linearity while the displacement sensor picks up information on fine roughness with high sensitivity and high responsivity.

Moreover, the shape measuring machine of the present invention has a main feature in that the displacement sensor is a differential transformer sensor, capacitive sensor, or eddy-current sensor.

Consequently, minute irregularities on the surface of the to-be-measured object can be measured with high accuracy.

Furthermore, the shape measuring machine of the present invention has main features in that the stylus is mounted at a first end being the one end of the arm, the displacement sensor and at least part of the scale detector are mounted at a second end being the other end of the arm, the support unit is mounted on the arm to be closer to the second end than the center of the arm, and the ratio of the length between the fulcrum of the arm and a distal end on the first end side to the length between the fulcrum and a distal end on the second end side is 1 : 1 - 6 : 1.

Furthermore, the shape measuring machine of the present invention has main features in that the scale detector has an arc-shaped scale, and the arc-shaped scale is a flexible linear scale affixed to a curved surface of an arc-shaped housing.

Consequently, although it is difficult to form graduations with a correct pitch directly on the curved surface, it is easy to form graduations with a correct pitch on a flat sheet-shaped member. Accordingly, a highly accurate scale can be easily formed.

Moreover, the curved surface of the housing has a main feature in that the shape of a cross section parallel to a surface of rotation of the arm is an arc with the fulcrum at the center.

Consequently, even if the arm rotates about the fulcrum, the distance between a scale reading unit and the scale is always constant. In addition, the angle of the scale with respect to the scale reading unit is also always constant. Hence, the scale can always be read on the same condition. Hence, there is little influence of external disturbance.

Accordingly, the scale can be read correctly, and the displacement of the arm can be measured with high accuracy.

Furthermore, the shape measuring machine of the present invention has a main feature in further including a hemispherical calibration jig of which shape and dimension are known, for calibrating at least one of the displacement sensor and the scale detector.

ADVANTAGEOUS EFFECTS OF THE INVENTION

Both a contour shape of a wide measurement range and a minutely uneven shape can be measured. The stylus has excellent trackability of minute irregularities. The cost of the shape measuring machine can be kept low.

BRIEF DESCRIPTION OF THE DRAWINGS

Fig. 1 is a conceptual diagram illustrating the configuration of a shape measuring machine of the present invention.
Fig. 2 is a conceptual diagram illustrating a measurement state with a stylus facing upward.
Fig. 3 is a schematic diagram of the shape measuring machine of the present invention.
Fig. 4 is an explanatory diagram for explaining calibration by the shape measuring machine according to the present invention.
Fig. 5 is a schematic explanatory diagram of a step gauge being a calibration jig of the present invention.
Fig. 6 is an explanatory diagram of a computed shape of a ball of a ball gauge (stylus height calibration).
Fig. 7 is an explanatory diagram of a computed shape of the ball of the ball gauge (arm length calibration).
Fig. 8 is an explanatory diagram of calibration of the radius of a distal end of the stylus.
Fig. 9 is a diagram illustrating the configuration of a shape measuring machine of a second embodiment of the present invention.
Fig. 10 is a block diagram illustrating the configuration of a portion that performs signal processing in the shape measuring machine of the second embodiment of the present invention.
Fig. 11 is a diagram explaining a calibration data creation process of a scale signal processing unit 1061.
Fig. 12 is a block diagram illustrating the configuration of a portion that performs signal processing and a selection in a shape measuring machine of a third embodiment of the present invention.
Fig. 13 is a block diagram illustrating the configuration of a portion that performs signal processing and a selection in a shape measuring machine of a fourth embodiment of the present invention, and a diagram explaining switching of a selection signal.
Fig. 14 is a diagram illustrating examples of second displacement data (surface roughness data) and first displacement data (contour shape data) of a case where displacement changes within a small range.
Fig. 15 is a block diagram illustrating the configuration of a portion that performs signal processing in a shape measuring machine of a fifth embodiment.
Fig. 16 is a diagram explaining signal processing and a correction process in the fifth embodiment.
Fig. 17 is a diagram further explaining signal processing and the correction process.
Fig. 18 is a diagram illustrating specific measurement examples in the fifth embodiment.
Fig. 19 is a diagram illustrating a specific measurement example in the fifth embodiment.
Fig. 20 is a diagram illustrating examples of an optical scale detection mechanism that detects displacement discretely with high accuracy.
Fig. 21 is a schematic diagram of a shape measuring machine where a displacement sensor is provided on the same side as a gauge head.
Fig. 22 is a conceptual diagram of a shape measurement/calibration apparatus according to the present invention.
Fig. 23 is an explanatory diagram for explaining methods for measuring a surface shape of a to-be-measured object and correcting the measurement data.
Fig. 24 is an explanatory diagram illustrating a difference in distance between a spherical portion center and a contact point in accordance with the shape of a spherical portion.
Fig. 25 is an explanatory diagram illustrating an angle formed by a spherical calibration jig and the stylus having the spherical portion in contact with the calibration jig.
Fig. 26 is a graph illustrating the relationship between the movement amount of the calibration jig and $\theta_1$.
Fig. 27 is a graph illustrating the relationship between the movement amount of the calibration jig and $\theta_3$.
Fig. 28 is a graph illustrating the relationship between the movement amount of the calibration jig and a radius r of the spherical portion.

DESCRIPTION OF EMBODIMENTS

Modes for carrying out the present invention are described in detail hereinafter with reference to the accompanying drawings. Here, portions indicated by the same symbol in the drawings are similar elements having a similar function. Moreover, in the present invention, when the range of values is expressed using "-", both boundary values are included in the range.

<Configuration>

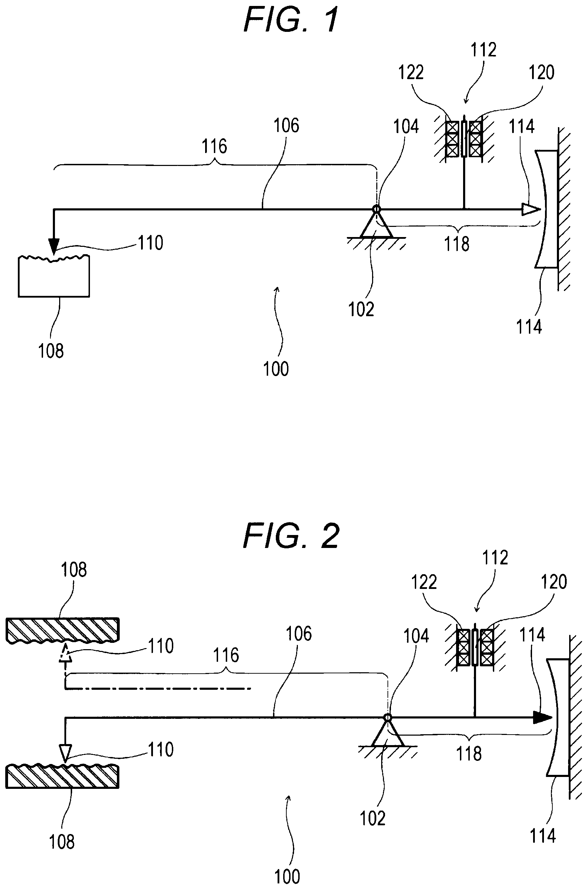

A first embodiment of a shape measuring machine of the present invention is described with reference to the drawings. Fig. 1 is a conceptual diagram illustrating the configuration of the shape measuring machine of the present invention. As illustrated in Fig. 1, a shape measuring machine 100 of the present invention mainly includes an arm 106 that swings with a support unit 102 as a fulcrum 104, a stylus 110 that comes into contact with a to-be-measured object 108, and is displaced up and down following the surface shape of the to-be-measured object 108, a displacement sensor 112 for detecting the displacement of the arm 106 caused by the swing, and a scale detector 114.

The stylus 110 is mounted at a first end 116 being one end of the arm 106. The displacement sensor 112 and at least part of the scale detector 114 are mounted at a second end 118 being the other end of the arm 104. The support unit 102 is mounted on the arm 106, closer to the second end 118 than the center. In other words, the first end 116 is configured to be longer than the second end 118.

The displacement sensor 112 is a sensor for detecting with high accuracy minute movements of the arm 106 that swings in synchronization with the up-and-down motion of the stylus 110. Any sensor can be adopted as the displacement sensor 112 as long as it can measure minute displacement of the arm 106. A differential transformer sensor, capacitive sensor, or eddy-current sensor can be suitably used as the displacement sensor 112. Especially, a differential transformer sensor that can measure minute displacement with high accuracy is preferred.

The scale detector 114 is a detector that reads graduations formed on a scale by an electrical, magnetic, or optical method to read the movement of the arm 106. There are various types and any type can be adopted also for the scale detector 114. A detector of a type that reads by an optical method is preferred. This is because the type that reads by the optical method is highly accurate, and is not influenced by a surrounding electric field and magnetic field.

In terms of the displacement sensor 112, the entire sensor may be mounted on the arm 106, but normally part of it is mounted on the arm 106. For example, the diagram of the displacement sensor 112 illustrated in Fig. 1 illustrates a differential transformer sensor. As illustrated in the figure, a core 120 is mounted on the arm 106. A coil (or transformer) 122 is not mounted on the arm 106.

Moreover, for example, when an eddy-current sensor is used, main portions such as a coil are mounted outside, and only a detection unit that can produce an eddy current may be mounted on the arm 106.

Hence, in the present invention, the displacement sensor 112 includes, as a part of the displacement sensor 112, not only parts constituting the senor but also portions to be detected. At least part of the displacement sensor 112 including the portions to be detected is mounted at the second end 118 of the arm 106.

Also in terms of the scale detector 114, at least part of the scale detector 114 including portions to be detected is mounted at the second end 118 of the arm 106 as in the displacement sensor 112.

In this manner, both the displacement sensor 112 that can measure minute displacement and the scale detector 114 that can correctly measure the entire shape of a large area are included. Hence, both minute irregularities on the to-be-measured object 108 and the entire contour of a wide range can be measured.

Moreover, neither the displacement sensor 112 nor the scale detector 114 is mounted at the first end 116 where the stylus 110 is mounted. Hence, their weights are not added to the stylus. Hence, the moment of inertia of the first end 116 is reduced. Accordingly, the stylus 110 can have excellent trackability of minute irregularities.

Furthermore, the support unit 102 is mounted on the arm, closer to the second end than the center. In other words, the shape measuring machine of the present invention is configured in such a manner as that the length between the fulcrum 104 and a distal end of the first end 116 is made longer than the length between the fulcrum 104 and a distal end of the second end 118.

Consequently, it becomes possible for the stylus 110 to move up and down even with a small force by the principle of leverage. Hence, the stylus 110 can easily follow minute irregularities on the surface of the to-be-measured object 108. Accordingly, the uneven shape can be measured with high accuracy.

Moreover, neither the displacement sensor 112 nor the scale detector 114 is mounted at the first end 116 where the stylus 110 is mounted. Hence, as illustrated in Fig. 2 (Fig. 2 is a conceptual diagram illustrating a measurement state with the stylus 110 facing upward), the stylus 110 is caused to face upward to permit measurement on the surface of the to-be-measured object 108 located above the stylus 110.

At this point in time, measurement of the to-be-measured object 108 located above becomes possible simply by causing the stylus 110 to face upward and applying a little upward force to the stylus 110. Consequently, a measurement target of which measurement target surface faces downward can also be easily measured.

Furthermore, neither the displacement sensor 112 nor the scale detector 114 is mounted at the first end 116 where the stylus 110 is mounted, and the first end 116 is configured to be longer than the second end 118. Hence, for example, the stylus can be inserted deep inside a to-be-measured object and conduct measurement as in the measurement of the shape of a cylindrical internal wall.

In this manner, the shape measuring machine of the present invention can conduct measurement even if a measurement target surface is located at a position where it is difficult to conduct measurement with a known apparatus.

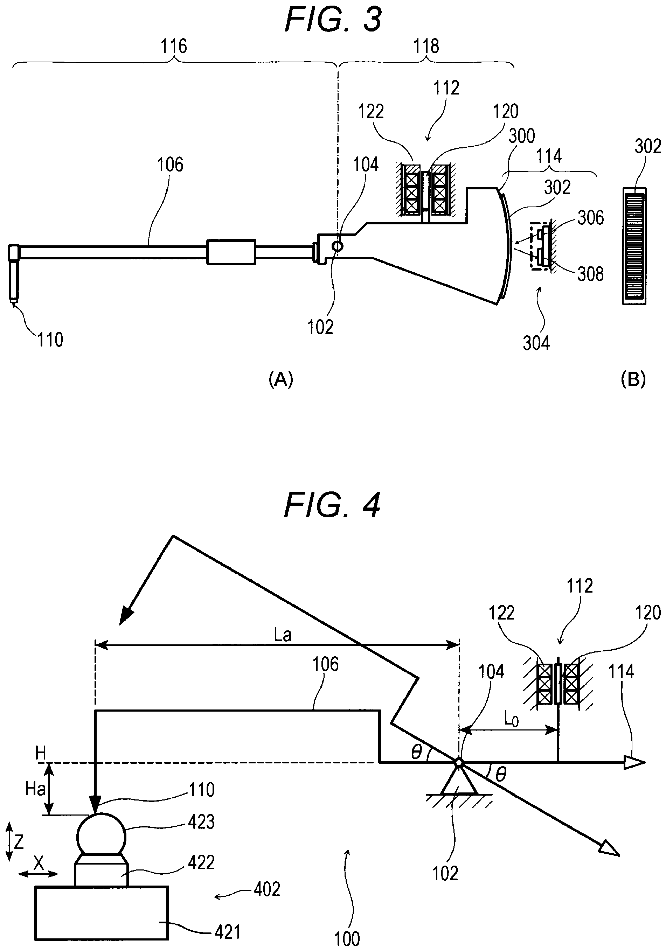

Next, one embodiment of the scale detector included in the shape measuring machine of the present invention is described with reference to the drawings. Fig. 3 is a schematic diagram of the shape measuring machine of the present invention. As illustrated in Fig. 3(A), the scale detector 114 is configured mainly including a scale 302 (a scale plate), a scale reading unit 304, and a computing unit (not illustrated).

The scale 302 is mounted on a distal end surface 300 of the second end 118 of the arm 106. Graduations are continuously formed on the scale 302. The distal end surface 300 is preferable to be a curved surface, especially an arc with the fulcrum 104 at the center. More specifically, the shape of a cross section of the distal end surface 300, the cross section being parallel to a surface of rotation of the arm 106, is preferable to be an arc with the fulcrum 104 at the center.

The distal end surface 300 is an arc with the fulcrum 104 at the center. Accordingly, even if the arm rotates (swings) about the fulcrum 104, the distance between the scale reading unit 304 and the scale 302 is always constant, and the angle of the scale 302 with respect to the scale reading unit 304 is also always constant.

Hence, the scale reading unit 304 can always read the scale on the same condition even if the arm 106 rotates. Hence, the scale reading unit 304 has little influence of external disturbance, can read the scale correctly, and can measure displacement of the arm with high accuracy.

The scale 302 can also be formed directly on the distal end surface 300. Alternatively, as illustrated in Fig. 3(B), it is preferable that the scale 302 be produced by forming graduations on a flexible sheet-shaped member, and the scale 302 be affixed to the distal end surface 300 to form the scale 302 on the distal end surface 300.

It is difficult to form graduations with a correct pitch directly on a curved surface. On the other hand, it is easy to form graduations with a correct pitch on a sheet-shaped member being a flat surface. Hence, the scale 302, which is a sheet-shaped member with graduations placed with a correct pitch, is affixed to the distal end surface 300 to enable easy formation of the highly accurate scale 302 on the distal end surface 300.

Here, a flexible member such as a plastic member or metal member can be used as a flexible sheet-shaped member used for the scale 302. Especially, aluminum, stainless, PET film, or the like is preferable to be used as the flexible sheet-shaped member.

In this manner, the scale 302 is produced using the flexible sheet-shaped member to be affixed to the distal end surface 300 being a curved surface. Accordingly, the scale 302 having extremely highly accurate graduations can be formed on the curved surface.

Consequently, a highly accurate scale detector can be configured.

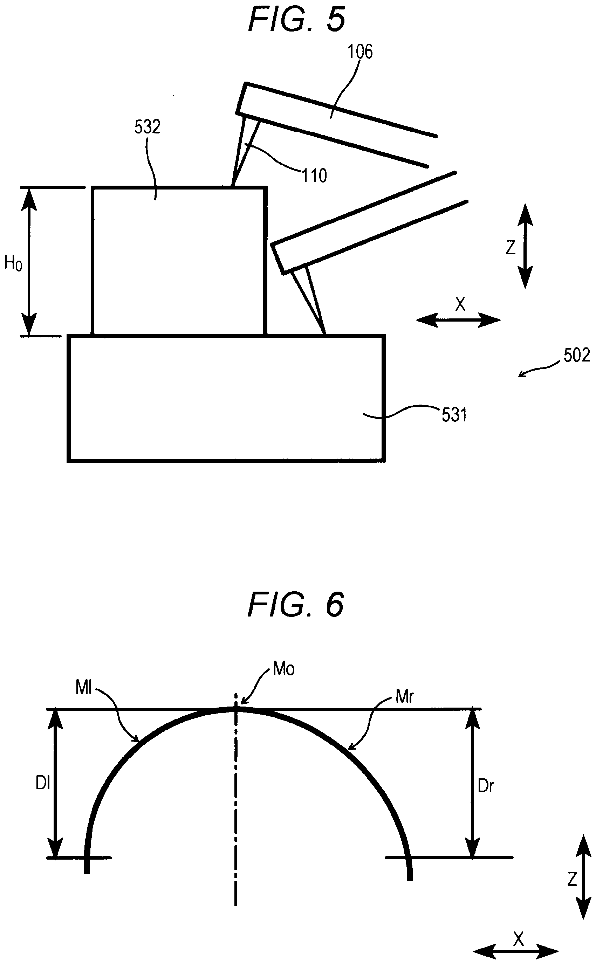

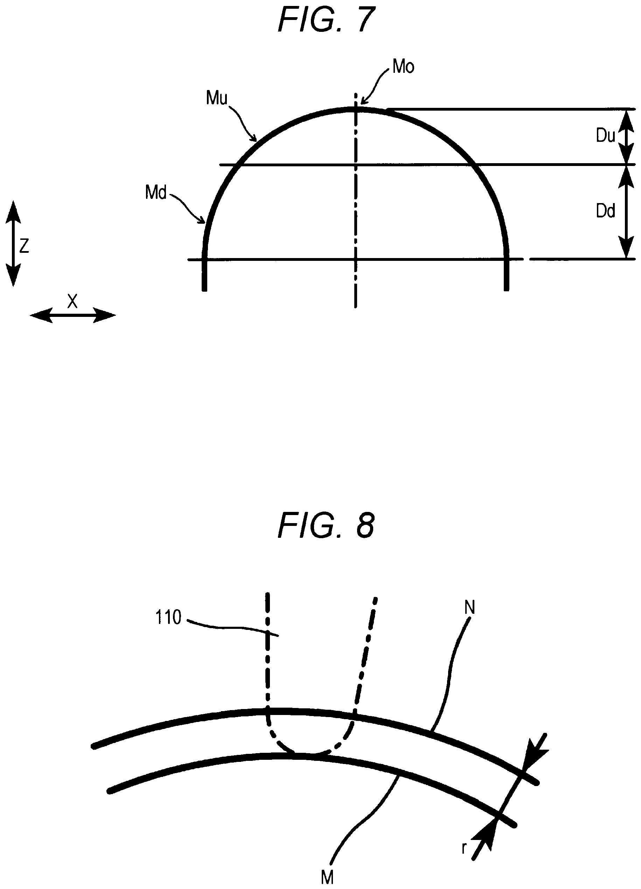

Next, a calibration jig being a part of the shape measuring machine according to the present invention is described with reference to the drawings. The calibration jig according to the present invention includes a ball gauge and a step gauge. Fig. 4 is an explanatory diagram for explaining calibration by the shape measuring machine according to the present invention. Fig. 5 is a schematic explanatory diagram of a step gauge being the calibration jig of the present invention. Fig. 6 is an explanatory diagram of a computed shape of a ball of the ball gauge (stylus height calibration). Fig. 7 is an explanatory diagram of a computed shape of the ball of the ball gauge (arm length calibration).

As illustrated in Fig. 4, in a ball gauge 402 being the calibration jig according to the present invention, let the length of the arm 106 (the horizontal length between the fulcrum 104 and the stylus 110) be La, let the horizontal length between the fulcrum 104 and the displacement sensor 112 be L0, and let the angle of the arm 106 with respect to a horizontal position at the fulcrum 104 upon the swing of the arm 106 be $\theta$. Moreover, the ball gauge 402 is configured including a block 421, a column 422 standing on a top surface of the block 421, and a ball 423 fixed on the column 422, the ball 423 requiring a diameter and sphericity in advance with high accuracy.

Moreover, as illustrated in Fig. 5, a step gauge 502 being the calibration jig according to the present invention is configured in such a manner as that a block gauge 532 is attached to a top surface of a reference base 531. The top surface of the reference base 531 is placed parallel to an X direction. The flatness of the top surface is precisely finished. The thickness of the block gauge 532 is known. Consequently, a distance Ho (step dimension) between the top surface of the reference base 531 and a top surface of the block gauge 532 is known.

The use of the calibration jig enables highly accurate calibration of the arm length and the radius of the ball at a distal end of the stylus.

<Operation>

Next, the operation of the shape measuring machine of the present invention is described. Referring to Fig. 1, the stylus 110 is placed on the surface of the to-be-measured object 108 while being added a predetermined load. The stylus 110 moves relatively to the to-be-measured object 108, follows projections and depressions on the surface of the to-be-measured object 108, and repeats up-and-down motion. A stepping motor or the like may either move the arm 106 or move a seat where the to-be-measured object 108 is placed, in a method for moving the stylus 110 relatively to the to-be-measured object 108.

The stylus 110 moves up and down to rotate the arm 106 about the fulcrum 104 supported by the support unit 102. At this point in time, the support unit 102 is disposed in such a manner as to place the fulcrum 104 at a position further away from the stylus than the center of the arm 106. Accordingly, the stylus 110 can easily move up and down with a small force by the principle of leverage regardless of that the displacement sensor 112 and the scale detector 114 are mounted at the second end 118.

In other words, the stylus 110 can reliably follow minute irregularities on the surface of the to-be-measured object 108. Accordingly, the shape of the surface of the to-be-measured object 108 can be measured with high accuracy.

Next, the displacement sensor 112 and the scale detector 114 detect displacement of the arm 106 caused by the rotational motion in synchronization with the up-and-down motion of the stylus 110. A description is given of a case using a differential transformer sensor as the displacement sensor 112. The core 120 mounted in such a manner as to move in synchronization with the arm 106 moves in the coil 122 in synchronization with the rotation of the arm 106.

An unillustrated processing unit processes an induced voltage that is generated in the coil when the core 120 moves in the coil 122. Accordingly, a displacement of the arm 106 is obtained. The processing unit further obtains a displacement of the stylus 110 from the displacement of the arm 106. Consequently, the surface shape of the to-be-measured object 108 can be measured.

Also in a case of using a capacitive sensor or eddy-current sensor instead of the differential transformer sensor, a displacement of the arm 106 is normally obtained by a method using these sensors, and a displacement of the stylus 110 is obtained from the displacement of the arm 106.

These displacement sensors are used to enable highly accurate measurement of the uneven shape of the surface of the to-be-measured object 108. For example, the CADICOM (CADICOM) series made by Tokyo Seimitsu Co., Ltd. can be preferably used as the capacitive sensor. E-DT-CA21A or the like is simply required to be used as the sensor. The response frequency is 4 kHz, which is very high, and measurement at high resolution and high response speed is possible.

Moreover, when the stylus 110 is scanning the surface of the to-be-measured object 108, the scale detector 114 also measures the displacement of the arm 106, and the unillustrated processing unit calculates the displacement of the stylus 110 from the displacement of the arm 106. Referring to Fig. 3, a light emitting unit 306 including an LD (Laser diode) or LED (Light emitting diode) applies light to the scale 302.

The applied light is reflected by the scale 302, and is received by a light receiving unit 308 including a PD (Photo diode) or the like. A signal of the brightness of the received light is converted by the light receiving unit into an electrical signal. The unillustrated processing unit obtains a displacement of the arm 106, and further obtains a displacement of the stylus 110 from the displacement of the arm 106.

Here, the displacement sensor 112 has high resolution, but has not-so-good accuracy when displacement is large, and has poor linearity in a wide detection range. On the other hand, the scale detector 114 does not have resolution as high as the displacement sensor 112, but maintains the accuracy even if displacement is large, and has good linearity in a wide detection range. In other words, the scale detector can ensure high linearity.

Hence, the processing unit (not illustrated) can display, on a display unit (not illustrated), a value measured by the displacement sensor 112 when the detection range or displacement is equal to or less than a predetermined value. Furthermore, the processing unit can display, on the display unit, a value measured by the scale detector 114 when the detection range or displacement exceeds the predetermined value.

Consequently, both high resolution measurement in a narrow range and contour measurement in a wide range, which are conventionally conducted by separate apparatuses, can be conducted by one machine.

The shape measuring machine of the present invention includes two detectors: the displacement sensor 112 and the scale detector 114. Accordingly, it is also possible to use one detector to calibrate the other detector and correct the origin.

Here, the differential transformer or the like has sensitivity that is likely to change, and also has its influence upon calibration. The arm 106's arm length $(L) = (La^2 + Ha^2)^{1/2}$ is a parameter close to a sensitivity coefficient K (a correction coefficient of a change in sensitivity of the differential transformer or the like). As L is increased, the displacement becomes large (= high sensitivity). As L is reduced, the displacement becomes small (= low sensitivity). Hence, it is difficult to separate L (La, Ha in reality) from K upon calibration. A scale is also placed in the shape measuring machine of the present invention. The scale has sensitivity that is unlikely to change (hardly changes). Hence, a scale signal is used to calculate L (La, Ha) correctly. The use of L (La, Ha) obtained correctly also enables a correct calculation of K.

Hence, calibration and a correction can be performed as follows.

A differential transformer sensor or the like is susceptible to changes in temperature. Accordingly, its sensitivity (the inclination of linearity) changes. Consequently, the point of zero (origin) is offset.

On accuracy inspection, the relative positions of the two sensors (the displacement sensor and the scale) are stored. When the measuring machine is calibrated (daily calibration), the deviation amount is detected with reference to the scale resistant to changes in temperature to correct the inclination and offset.

Next, a calibration method using the calibration jig according to the present invention is described.

The ball gauge 402 illustrated in Fig. 4 and the block gauge 532 illustrated in Fig. 5 are used to perform calibration as follows:

- Prepare design values of the stylus height Ha, the arm length La, and the radius of the distal end of the stylus 110.
- Obtain measurement values tracing the ball 423 of the ball gauge 402 with the stylus 110 (ball measurement data), and measurement values placing two parallel surfaces of the step gauge parallel to the X direction, and tracing them with the stylus 110 (step measurement data).
- Calculate computation shape values of the ball of the ball gauge (so called to distinguish them from known shape values correctly obtained in advance) from the ball measurement data.
- Calculate a difference between the right and the left in the X direction with a vertex of the calculated computation shape values as a boundary.
- Calibrate the stylus height Ha in such a manner as to make the calculated difference between the right and the left small.
- Calculate a difference of the computation shape values between the up and the down in a Z direction.
- Calculate, from the step measurement data, a computation step dimension (so called to distinguish it from the kwon step dimension correctly obtained in advance) of the two parallel surfaces of the step gauge.
- Calibrate the arm length La temporarily in such a manner as to make the calculated difference of the computation shape values between the up and the down in the Z direction small. Calibrate the arm length La afterward in such a manner as to make the calculated computation step dimension equal to the known step dimension.

If the distal end of the stylus 110 has as high sphericity as a ruby ball, and its radius requires correctness, the above method will do. If not, the radius of the distal end of the stylus 110 is calibrated from the difference of the ball of the ball gauge between the known shape value and the computation shape value after the stylus height Ha and the arm length La are calibrated.

Next, the calibration method is further described using Figs. 4 and 5. Firstly, the design values of the stylus height Ha, the arm length La, and the radius of the distal end of the stylus 110 are prepared. The ball gauge 402 is then mounted. As illustrated in Fig. 4, the stylus 110 traces an upper side of the ball 423 to obtain the ball measurement data.

When the ball measurement data is obtained, the prepared design values are used to calculate the computation shape values (Figs. 6 and 7) of the ball 423 from the measurement data. Fig. 6 represents the computation shape values of when the arm length La is correct and the stylus height Ha is incorrect. Fig. 7 represents the computation shape values of when the stylus height Ha is correct and the arm length La is incorrect. The actual computation shape values are a combination of both. They are illustrated, separated for description.

Next, a difference between a computation shape value Ml on the left and a computation shape value Mr on the right is calculated. In this case, the computation shape values are divided into the left and the right in the X direction with a vertex Mo as a boundary. In terms of measurement data area Dl and Dr, which are equal in numbers on the right and the left from the vertex Mo, circles are respectively obtained by the least squares method. A difference between the radii of the circles is defined as the difference between the computation shape values. In theory, when the distal end of the stylus 110 deviates from a reference line H, the computation shape values represent an elliptical shape inclined obliquely (the example illustrated in Fig. 6 is an elliptical shape having a long axis from an obliquely upper left direction to an obliquely lower right direction). The difference between the right and left computation shape values is calculated to determine the difference. When the difference is larger than a predetermined value, the stylus height Ha is computed in such a manner to make the difference small. The stylus height Ha is temporarily calibrated to the value. When the stylus height Ha is temporarily calibrated, the difference between the right and left computation shape values is determined again and confirmed.

When the difference between the right and left computation shape values is judged to be smaller than the predetermined value, then a difference between a computation shape value Mu on the upper side and a computation shape value Md on the lower side is calculated. In this case, the computation shape values are divided into upper measurement data of an area between the vertex Mo and Du and lower measurement data of an area between Du and Dd (Du and Dd are equal in numbers). A circle is obtained by the least squares method for each of the upper and lower measurement data sets. The difference between the radii of the circles is defined as the difference of the computation shape values. In theory, when the calculated arm length is different from the input design value, the computation shape values represent an elliptical shape having a long or short axis in the up-and-down direction (an elliptical shape having a long axis in the up-and-down direction in the example illustrated in Fig. 7).

The difference between the upper and lower computed values is calculated to determine the difference. When the difference is larger than a predetermined value, the arm length La is computed in such a manner to make the difference small. The arm length La is temporarily calibrated to the value. When the arm length La is temporarily calibrated, the difference between the upper and lower computation shape values is determined again and confirmed.

With processing up to this point, the stylus height Ha and the arm length La approach true values. The computation shape values of the ball 423 approach the known shape values more correctly. Hence, next, the step gauge 502 is set in the shape measuring machine 100 instead of the ball gauge 402 to be traced by the stylus 110 as illustrated in Fig. 5. A computation step dimension is calculated from the obtained step measurement data. The arm length La is calibrated in such a manner as to make the calculated computation step dimension equal to the known step dimension Ho. Let the detection amount of the displacement sensor 112 be Go. The calibration method is as with the following equation.

$$La = Lo \times Ho/Go$$

When the arm length La is correctly calibrated, a difference between the right and left computation shape values is calculated from the ball measurement data to determine the difference. When the difference is larger than a predetermined value, the stylus height Ha is calibrated in such a manner as to make the difference small. Consequently, the calibration of the stylus height Ha and the arm length La is complete.

As a result, the computation shape values of the ball 423 are correctly calculated. Hence, as illustrated in Fig. 8 (Fig. 8 is an explanatory diagram of calibration of the radius of the distal end of the stylus), a difference r between a known shape value N and a computation shape value M of the ball 423 is set as the radius of the distal end of the stylus 110. The radius of the distal end of the stylus 110 is calibrated to the value. In this case, if the distal end of the stylus 110 has worn away, the difference r between the known shape value N and the computation shape value M varies depending on the measurement position. Hence, if so, the stylus can be replaced without calibrating the radius of the distal end of the stylus.

As described above, a spherical ball gauge is used as a gage for calibration. Moreover, the distal end of the stylus is also spherical. The arm has a mechanism to turn around the fulcrum to check the linearity. The displacement occurring due to the turn is read by the arc scale. In other words, everything is circular motion. The displacement of circular motion can be read as an angle.

In a case where turning motion is made into linear motion using a parallel link mechanism, which is a conventional technology, a correction of an error equivalent to $\sin\theta/\theta$ is required. Calibration with linearity cannot be successively performed. However if everything is circular motion, and they are calibrated with a spherical gauge, a conversion can be caused from an angular change.

Hence, with the use of the arc scale and the use of the spherical stylus and the ball gauge, it is possible to determine linearity from the angle, and make a highly accurate correction of linearity.

<Evaluations>

Next, evaluations were performed of changes in measurement properties by changing the position of the fulcrum of the arm of the shape measuring machine according to the present invention, in other words, changing the ratio of the length of the first end 116 to the length of the second end 118.

(1) Evaluation Contents

The ratio of the length of the first end 116 to the length of the second end 118 is changed to evaluate sensitivity (responsivity) and linearity of the displacement sensor 112 and the scale detector 114. A differential transformer sensor is used as the displacement sensor 112.

Sensitivity (responsivity) in the evaluations indicates trackability of minute displacement, and linearity indicates spatial accuracy in the entire measurement range. The sensors used in the present invention require high linearity in a wide measurement range while meeting high sensitivity and high responsivity in the trackability of minute displacement.

Next, a measurement method of each evaluation item is described.

Measurement of sensitivity was performed by providing minute displacement to a to-be-measured object using a piezoelectric element, and measuring the displacement of the displacement sensor of the detector from the input (displacement) to the piezoelectric element.

Measurement of linearity was performed by using a laser length measuring machine and a movable stage, moving the stage in a state where the stylus 110 is caused to vertically touch the movable stage, measuring the movement amount of the stage with the laser length measuring machine, and measuring a difference from the displacement of the stylus.

(2) Evaluation Results

Next, the evaluation results are described. The following table 1 is a table showing the evaluation results. As illustrated in table 1, when the ratio of the length between the fulcrum and the distal end of the first end (the length of the first end) to the length between the fulcrum and the distal end of the second end (the length of the second end) was 1 : 1 - 6 : 1, sensitivity and linearity were both excellent. Moreover, when the range was 2 :1 - 4 : 1, sensitivity and linearity were most excellent.

It can be seen from the above results that it is preferable that the ratio of the length between the fulcrum and the distal end of the first end (the length of the first end) to the length between the fulcrum and the distal end of the second end (the length of the second end) be 1 : 1 - 6 : 1, and most preferably, 2 : 1 - 4 : 1.

[Table 1]

| Ratio | Sensitivity | Linearity | Overall Evaluation |
|---|---|---|---|
| Greater than 0 and less than 1 : 1 | Fair | Fair | Fair |
| 1 : 1 | Good | Excellent | Good |
| 2 : 1 | Excellent | Excellent | Excellent |
| 4 : 1 | Excellent | Excellent | Excellent |
| 6 : 1 | Good | Good | Good |
| 8 : 1 | Fair | Fair | Fair |
| 10 : 1 | Poor | Poor | Poor |

In the above table, "excellent" indicates that the evaluation result was very good. "Good" indicates that the evaluation result was good. "Fair" indicates that the evaluation result was not good but barely commercially viable as a product. "Poor" indicates a failure as a product.

Next, another embodiment of the present invention is described.

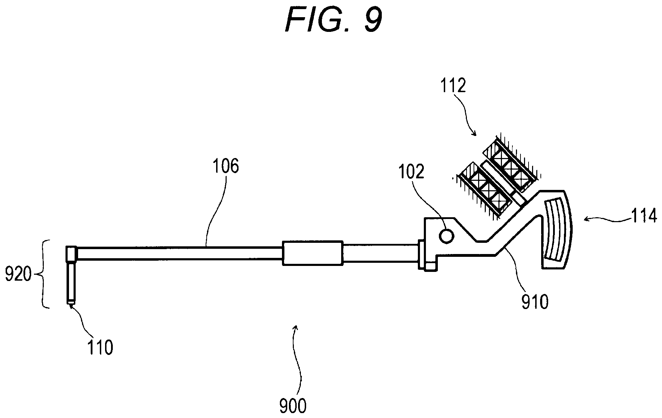

Fig. 9 is a diagram illustrating the configuration of a shape measuring machine of a second embodiment of the present invention.

As illustrated in Fig. 9, a shape measuring machine 900 of a second embodiment includes a holder 910 rotatably supported by the support unit 102 to engage with a housing, the arm 106 to be detachably caught by the holder 910, the stylus 110 provided at a distal end of the arm 106, the displacement sensor 112 (a differential transformer sensor in the second embodiment) that outputs a signal in accordance with the displacement of the holder 910, and the scale detector 114 that outputs a signal in accordance with the displacement of the holder 910. The arm 106 provided with the stylus 110 is referred to as a gauge head 920. The displacement sensor 112 includes a fixed portion fixed to the housing of the shape measuring machine 900, and including a plurality of coils, and an iron-core portion attached to the holder 910. The position of the iron-core portion with respect to the plurality of coils of the fixed portion changes with the rotation of the holder 910. The strength of an alternating current signal (detection signal) generated in the coil changes. The scale detector 114 includes a scale attached to the holder 910 and having a black and white pattern radially provided with the support unit 102 at the center, and a detection unit fixed to the housing of the shape measuring machine 900 to read the displacement (rotation amount) of the scale. When the scale rotates with the rotation of the holder 910, the detection unit reads the rotation amount (rotation position). An index scale may be used for the detection unit.

The displacement sensor 112 and the scale detector 114 are widely known. Therefore, they are not described in detail further. As described above, the differential transformer sensor can detect minute displacement with high resolution. However, the linearity of the differential transformer sensor in a wide detection range is not sufficient. On the other hand, the scale sensor can detect displacement with high accuracy in a wide range. However, the scale sensor has difficulty in obtaining as high resolution as the differential transformer sensor.

From the above points, the displacement sensor is a high-resolution (high-sensitivity) sensor and a sensor with high responsivity. However, the displacement sensor is not a sensor with high linearity. Moreover, the scale sensor can measure displacement with high accuracy in a wide range, and has high linearity. However, the scale sensor is not a sensor with high resolution and high responsivity.

For example, a tape scale such as the FASTRACK series made by Renishaw or ERA700 made by HEIDENHAIN is suitably used as the scale detection mechanism. Alternatively, the scale detection mechanism may be a general stainless scale, or arc scale marked on a glass surface.

The above-mentioned FASTRACK series made by Renishaw is affixed by double-sided tape to the curved portion. The scale is consecutively marked with graduations with a pitch of 20 $\mu$m. In the case of an affixation method with double-sided tape, some deviation and the like may occur depending on the precision of affixation. In terms of such deviation, multiple block gauges with different thicknesses are measured in advance and calibration is performed drawing a correlation straight line. Accordingly, the deviation is checked and corrected. The advantage of the use of such a scale is that since the graduations are continuously marked on multiple points at regular intervals, a correction including linearity can be made based on the continuity. From the above point, the scale detector is a high-linearity detector that has high linearity and can correct the linearity.

In other words, in the case of a scale formed into a curve from the beginning, it is difficult to mark graduations at regular short intervals with high accuracy also in the respect of the accuracy of the curvature of the curved surface. It is very expensive to produce a scale with precise linearity.

In the case of a tape scale, it is produced in a linear shape at the beginning. Hence, linear calibration with laser light or the like makes it possible to obtain a scale marked with highly accurate graduations at regular intervals with a very small pitch. When the linear scale is affixed to the curved surface, a minute error may occur upon the affixation. However, it becomes possible to estimate the amount of deviation in the affixation from the specific high accuracy of and the continuity accuracy of the evenly-spaced graduations of the tape scale.

For example, the influence of thermal expansion of the scale itself and the like is also conceivable under a severe environment in terms of the temperature condition. However, if the scale is thermally expanded due to the environment, it is not considered that part of the scale is locally and thermally expanded, but is generally considered that the entire scale is uniformly and thermally expanded.

In such a state, it is possible to perform continuous calibration suitable to the temperature environment by conducting configuration sample measurements at some stages, and performing calibration on multiple points under the state.

Examples of such a scale sensor also include a laser scale used for laser length measurement. This uses interference of light. The laser scale is not a solid scale but can measure a length correctly in a non-contact manner, has high linearity in a long range, and plays the role of a scale. For example, DISTAX 300A made by Tokyo Seimitsu Co., Ltd. or the like can measure a length using laser interference. The laser scale using laser interference has stable linearity if a medium has a uniform refractive rate in a wide range. Hence, this is a scale with high linearity.

Not limited to a laser or solid scale but various scales can be suitably used as such a scale sensor as long as they can measure not minute displacement but a distance correctly in long range.

Moreover, on the other hand, in terms of the linearity of the differential transformer, a deviation changes depending on how much the core portion of the differential transformer deviates from the coil portion. In other words, the linearity does not deviate uniformly but the linearity is lost depending on the relative position to the coil of the core.

Under a certain room temperature condition, it is recommended to first evaluate a deviation of the linearity of the differential transformer detector from the scale detector and then evaluate a deviation of the linearity of the differential transformer detector from the scale detector under a different temperature environment.

The influence of the thermal expansion of the scale of the scale detector can be estimated to some extent based on the deviation of the linearity of the differential transformer due to the temperature environment from the scale detector.

Moreover, also when a scale of a range of 5 mm with a pitch of 20 $\mu$m is assumed, there are graduations as many as 250 within the range. Some block gauges with different thicknesses are measured based on the continuity of the graduation positions. A measurement value of a measurement target is calculated based on the correlation straight line. Consequently, it is possible to include a function of performing an interpolation between graduations even between the graduations. In other words, more highly accurate measurement can be conducted based on the continuity of the graduations.

On the other hand, in discrete measurement, it is difficult to fill in for the accuracy between the graduations. In other words, if calibration is performed based on one point, when some error occurs in the absolute accuracy of the one point, reliability in all linearity is lost. On the other hand, if multiple points exist continuously at regular intervals, a partial displacement state can be checked from an overall check. Accordingly, the accuracy of linearity (linearity) can be stably ensured.

However, there may be a case where a problem arises such as that double-sided tape fixing the scale is gradually peeled off with long-term use, and the general accuracy starts deviating. In such a case, it is recommended to observe a relative deviation of accuracy from the differential transformer detection mechanism.

Even in the differential transformer detection mechanism, if displacement is small, linearity is relatively ensured especially around the origin. If there is a large discrepancy between them around the origin, and if the point of zero positions have started deviating from each other in both the detection mechanisms, it becomes possible to check the detection mechanisms mutually considering the influence of the deviation of the scale or differential transformer due to a time-varying change. If there is not such a check function, continuous use is performed, and accuracy calibration cannot be performed at some point during use, it is not possible to check whether or not the deviation of accuracy is occurring.

According to the calibration of the present application, displacement caused on one arm is always checked by two sensors having different detection principles. Hence, also when the status of either sensor is not normal, the abnormality can be detected immediately from a relative data relationship between them.

Hence, it is possible to automatically and mutually diagnose the accuracy of the detectors by checking the integrity of data output from both sensors without frequently doing calibration work to measure a standard sample. As a result, the accuracy is ensured also in long-term use, and measurement can be accurately conducted.

In the second embodiment, detection signals output from the displacement sensor 112 and the scale detector 114 are processed by an unillustrated signal processing unit. The signal processing unit may be provided inside or outside the housing of the shape measuring machine 900. Furthermore, part of the signal processing unit may be provided inside the housing of the shape measuring machine 900 and the rest outside the housing of the shape measuring machine 900.

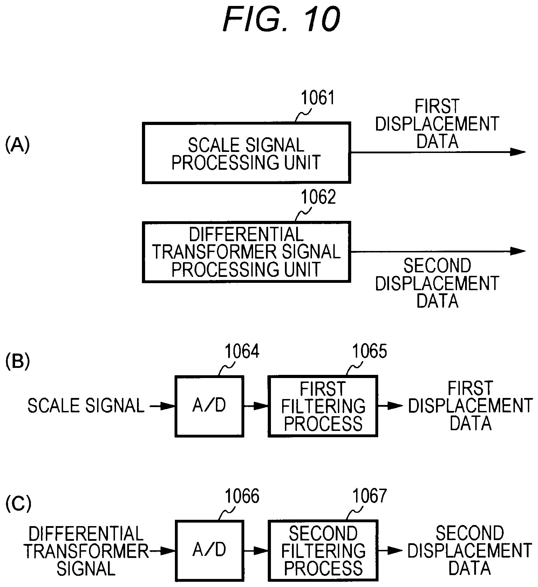

Fig. 10 is a block diagram illustrating the configuration of a portion that performs signal processing in the shape measuring machine of the second embodiment, in which (A) illustrates the entire configuration, (B) illustrates the configuration of a scale signal processing unit 1061, and (C) illustrates the configuration of a differential transformer signal processing unit 1062.

The shape measuring machine of the second embodiment includes the scale signal processing unit 1061 and the differential transformer signal processing unit 1062 as illustrated in Fig. 10(A). The shape measuring machine conducts measurement while moving the stylus 110 on the surface of a work W at a constant speed. Hence, the time axis of the detection signals output from the displacement sensor 112 and the scale detector 114 corresponds to the distance on the surface of the work W. This is used for processing in the signal processing unit to perform signal processing.

The scale signal processing unit 1061 processes a detection signal output from the scale detector 114, and generates and outputs first displacement data. For example, as illustrated in FIG. 10(B), the scale signal processing unit 1061 performs, on a scale signal being the detection signal output from the scale detector 114, an A/D conversion process 1064 that converts the scale signal into a digital signal. Furthermore, a first filtering process 1065 to remove components equal to or less than a wavelength corresponding to a displacement component in a long distance is performed on the digital signal to generate the first displacement data.

To convert the vertical displacement of the gauge head 920 into the rotation amount of the arm 106 at the arc scale and detect it, the scale detector 114 converts a change in rotation amount into a change in height. The conversion can be basically performed by a conversion equation. Various errors exist in an actual measuring apparatus. Accordingly, the rotation amount of a case where the gauge head 920 is actually correctly displaced in the up-and-down direction, in other words, the detection signal of the scale detector 114, is measured. Calibration data is created from this relation, and stored. The actual detection signal is then calibrated based on the calibration data.

The scale signal processing unit 1061 stores, as the calibration data, a difference between the detection signal that is output from the scale detector 114 when correct displacement is performed, and the correct displacement. When generating the first displacement data, the scale signal processing unit 1061 also makes corrections for the calibration data.

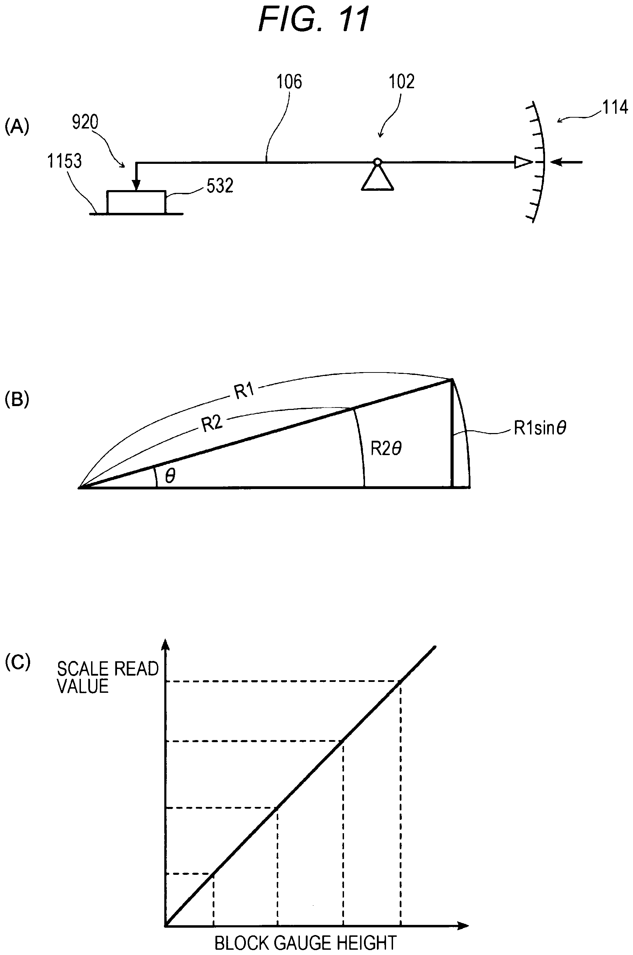

Fig. 11 is a diagram explaining the calibration data creation process of the scale signal processing unit 1061. As illustrated in Fig. 11(A), the arm 106 rotatably supported by the support unit 102 is provided at one end with the gauge head 920, and at the other end with part of the scale detector 114, to detect a displacement (or the rotation amount) along the arc at the other end of the arm 106.

As illustrated in Fig. 11(B), let the radius of rotation between the support unit 102 and the gauge head 920 be R1, and let the radius of rotation between the support unit 102 and the arc scale of the scale detector 114 be R2. A case is considered where the gauge head 920 is displaced in the up-and-down direction and the arm rotates by $\theta$. In this case, the vertical displacement of the gauge head 920 is $R1\sin\theta$. A displacement of the arc scale along the arc is $R2\theta$. Therefore, a vertical displacement D of the gauge head 920 is expressed as $D = R1\sin(d/R2)$ where a displacement of the scale detector 114 along the arc scale is d.

As described above, in the actual measuring apparatus, various errors exist. Accordingly, a deviation (error) from the formula occurs. Hence, the calibration data is created to make a correction. As illustrated in Fig. 11(A), the block gauge 532 is placed on a measuring stand 1153. The support unit 102 is fixed. The gauge head 920 is brought into contact with the block gauge 532. A detection signal output from the scale detector 114 is read. This operation is performed on the block gauges 532 with different heights. In other words, block gauges having different heights are measured fixing the visual point. The measurement allows the obtainment of the calibration data being the difference between the detection signal that is output from the scale detector 114 when correct displacement is performed, and the correct displacement to store the calibration data. Fig. 11(C) is a diagram illustrating a change example of a read value of the detection signal of the scale detector 114 of when the block gauges with different heights are measured.

Return to Fig. 10, the differential transformer signal processing unit 1062 processes a detection signal output from the displacement sensor 112, and generates second displacement data. The differential transformer signal processing unit 1062 can perform similar processing to one that is conventionally performed, on the detection signal output from the displacement sensor 112 to output displacement data similar to the conventional one, as the second displacement data.

As illustrated in Fig. 10(C), the differential transformer signal processing unit 1062 performs, for example, an A/D conversion process 1066 that causes a conversion into a digital signal, on a differential transformer signal being the detection signal output from the displacement sensor 112. The differential transformer signal processing unit 1062 further performs, on the digital signal, a second filtering process 1067 that removes distortion, noise, and the like of the stylus 110 to generate the second displacement data. In the second filtering process 1067, for example, if the radius of the distal end of the stylus 110 is 2 μm, components equal to or less than 2.5 μm are removed. Furthermore, if displacement is large, the linearity of the detection signal output from the displacement sensor 112 deteriorates. Hence, it is desired to obtain the second displacement data (surface roughness data) after creating and correcting the calibration data beforehand.

In the second embodiment, the first displacement data and the second displacement data are output as they are. In other words, in the second embodiment, the contour shape data indicated by the first displacement data and the surface roughness data indicated by the second displacement data can be simultaneously obtained in one measurement.

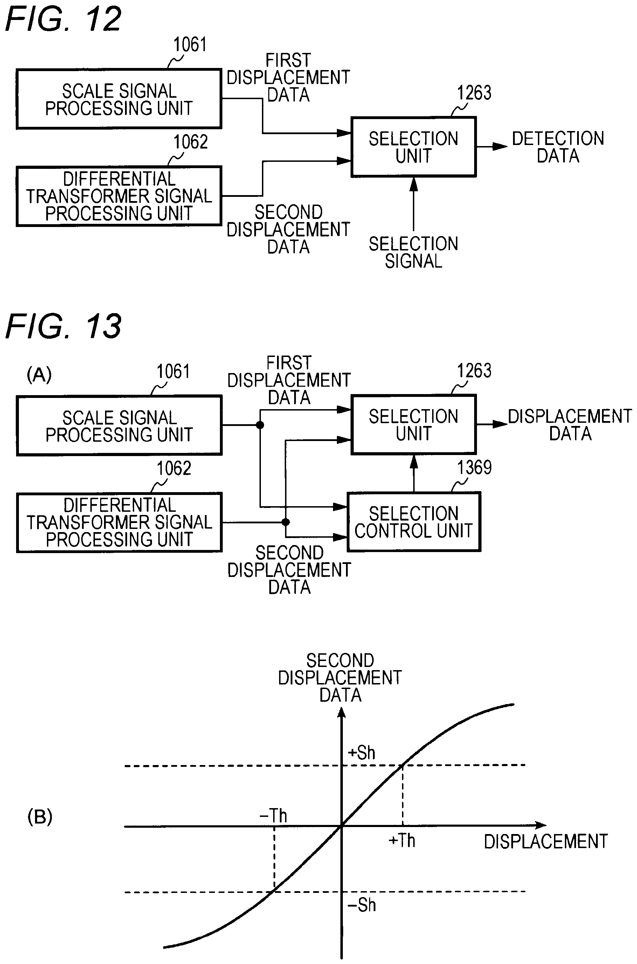

Fig. 12 is a block diagram illustrating the configuration of a portion that performs signal processing and a selection in a shape measuring machine of a third embodiment of the present invention.

The shape measuring machine of the third embodiment includes the scale signal processing unit 1061, the differential transformer signal processing unit 1062, and a selection unit 1263 as illustrated in Fig. 12. The scale signal processing unit 1061 and the differential transformer signal processing unit 1062 are the same as those of the first embodiment.

The selection unit 1263 selects and outputs one of the first displacement data output from the scale signal processing unit 1061 and the second displacement data output from the differential transformer signal processing unit 1062, in accordance with a selection signal indicating which of the contour shape and the surface roughness is measured. Specifically, when the contour shape is measured, a signal to select the first displacement data is input as the selection signal. The selection unit 1263 outputs the first displacement data output from the scale signal processing unit 1061 as detection data. Moreover, when the surface roughness is measured, a signal to select the second displacement data is input as the selection signal. The selection unit 1263 outputs the second displacement data output from the differential transformer signal processing unit 1062 as the detection data. For example, a user of the shape measuring machine operates a process selection button provided to the apparatus to generate the selection signal.

In the third embodiment, the selection unit 1263 selects and outputs one of the first and second displacement data in accordance with the selection signal. However, the selection unit 1263 can also make a selection by another method. In a fourth embodiment described next, a selection made by the selection unit 1263 is controlled by another method.

Fig. 13 is a block diagram illustrating the configuration of a portion that performs signal processing and a selection in a shape measuring machine of the fourth embodiment of the present invention, and a diagram explaining switching of the selection signal.

As illustrated in Fig. 13(A), the fourth embodiment has a configuration where a selection control unit 1369 is further provided in addition to the configuration of the third embodiment illustrated in Fig. 12. The selection control unit 1369 receives the first and second displacement data and controls selection in the selection unit 1263. Fig. 13(A) describes the selection control unit 1369 receives both the first and second displacement data, but may receive only one of them.

As described above, in the second displacement data output from the differential transformer signal processing unit 1062, when displacement increases, an error increases. Fig. 13(B) illustrates a change example of the value of the second displacement data from actual displacement. As illustrated in Fig. 13(B), if the second displacement data is, for example, within a range between an upper threshold value +Sh and a lower threshold value -Sh, the value of the second displacement data changes with high linearity (linearly) from the actual displacement. In contrast, in a range equal to or more than the upper threshold value +Sh, and a range equal to or less than the lower threshold value -Sh, linearity deteriorates and the error increases. Naturally, the error can be corrected by calibration. However, the error changes depending on the environment such as a change in temperature, and also changes over time. Hence, it is difficult to correct the error with high accuracy. Hence, the selection control unit 1369 of the third embodiment controls the selection unit 1263 to select the second displacement data if the second displacement data is within the range between the upper and lower threshold values ±Sh, in other words, if displacement is within ±Th corresponding to ±Sh, and to select the first displacement data if the second displacement data is out of the range between the upper and lower threshold values ±Sh, in other words, if displacement is out of the range of ±Th.

Whether displacement is within or out of the range between the upper and lower threshold values ±Th can also be determined based on the first displacement data output from the scale signal processing unit 1061.

In other words, a case of such a correction corresponds to a case where a correction is not made with the first displacement data based on the judgment that linearity is ensured. Even the differential transformer detection mechanism being the second displacement data is on the precondition that the vicinity of the point of zero is a range that ensures linearity and requires no correction based on the first displacement data. Which area should be set as a correction range depends on the area where the second displacement data is regarded to ensure linearity in prior calibration.

When a contour shape is measured, surface roughness may also be desired to be measured simultaneously. In such a case, for example, the contour shape is conventionally measured and then the surface roughness of the same surface is measured. Accordingly, the measurement time is long. In contrast, in the third embodiment, if displacement is within the range between the upper and lower threshold values, the surface roughness data is output. If displacement is out of the range between the upper and lower threshold values, the contour shape data is output. The surface roughness data can also be used as the contour shape data. Hence, the contour shape data can be obtained over the entire measurement range, and also the surface roughness data can be obtained at the same time if displacement is within the range between the upper and lower threshold values.

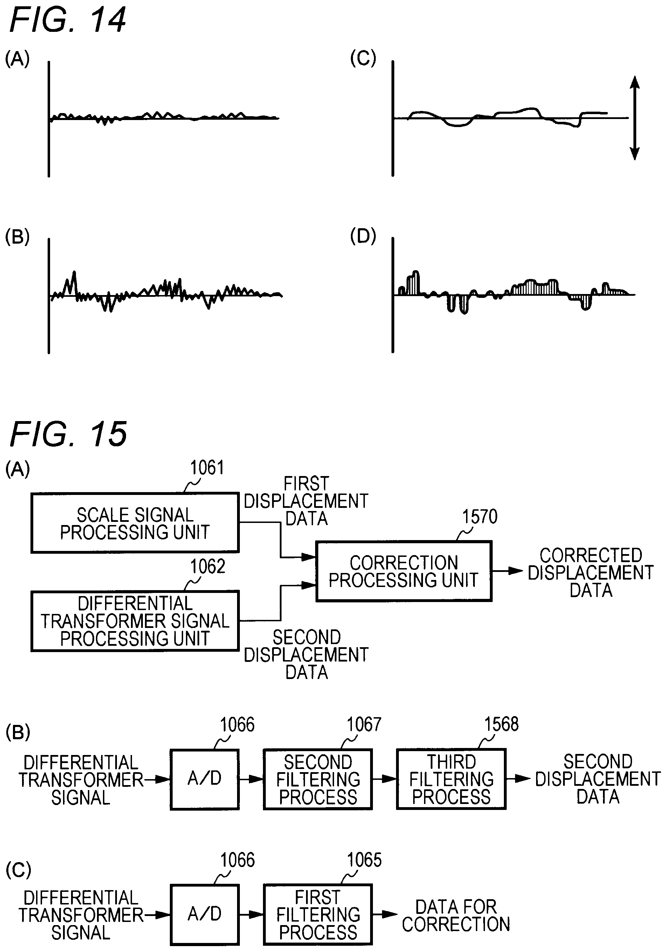

Fig. 14 is a diagram illustrating examples of the second displacement data (surface roughness data) and the first displacement data (contour shape data) of a case where displacement changes within a small range. Fig. 14(A) illustrates a change example of the second displacement data (surface roughness data). Fig. 14(B) enlarges and illustrates changes in the second displacement data (surface roughness data). Fig. 14(C) illustrates a change example of the first displacement data (contour shape data). Fig. 14(D) enlarges and illustrates changes in the first displacement data (contour shape data).

As illustrated in Fig. 14(B), the second displacement data (surface roughness data) has high resolution. Accordingly, even if it is enlarged, its change is smooth. The second displacement data (surface roughness data) has, for example, a resolution of 1 nm. In contrast, as illustrated in Fig. 14(D), the first displacement data (contour shape data) has lower resolution than the second displacement data. Accordingly, if it is enlarged, its change is stepwise. The first displacement data (contour shape data) has, for example, a resolution of 50 nm, and has sufficient resolution as data indicating a contour shape. Hence, there is no problem in a case of indicating a contour shape. In the fourth embodiment, when displacement is out of the range between the upper and lower threshold values, even if the first displacement data is output as data indicating a contour shape, there is not particularly a problem. Moreover, as illustrated in Figs. 14(B) and 14(D), the resolution of the first displacement data (contour shaper data) is insufficient as data indicating surface roughness. As described above, in the fourth embodiment, if displacement is within the range between the upper and lower threshold values, the second displacement data (surface roughness data) is output as the data indicating a contour shape. Hence, surface roughness can also be measured.

In the first to fourth embodiments, signal processing is performed on both the detection signals output from the scale detector 114 and the displacement sensor 112. The detection signals are then converted into the first and second displacement data, both or either of which are selected and output. The data to be output is the scale signal and the differential transformer signal.

However, the scale signal (the first displacement data) and the differential transformer signal (the second displacement data) are signals that have individually different resolutions and sensitivities but are obtained by measuring the same portion of a work. They are related to each other. Hence, it is desired that the scale signal (the first displacement data) and the differential transformer signal (the second displacement data) be mutually corrected to generate measurement data suitable to a requirement. In an embodiment described below, such a correction process is performed.

As described above, the scale signal output from the scale detector 114 does not have high resolution, but has high linearity over a wide detection range. On the other hand, the differential transformer signal output from the displacement sensor 112 has high resolution but has insufficient linearity in a wide detection range. Therefore, the basic correction process is to create correction data in such a manner as that a long-period component of the differential transformer signal (the second displacement data) agrees with a long-period component of the scale signal (the first displacement data), and to correct the differential transformer signal (the second displacement data) only for the correction data.

There can be various modifications for the correction process. Firstly, there are two cases: in one case, correction data generated based on the detection signals output from the displacement sensor 112 and the scale detector 114 is output during movement when the stylus 110 is being moved along the surface of the work W at a constant speed, in other words, is output in real time; in the other case, the correction data is output after the movement of the stylus 110 along the surface of the work W in the measurement range is finished. Firstly, the case of real-time output is described.

Fig. 15 is a block diagram illustrating the configuration of a portion that performs signal processing in a shape measuring machine of a fifth embodiment, in which (A) illustrates the entire configuration, (B) illustrates the configuration of the differential transformer signal processing unit 1062, and (C) illustrates another configuration of the differential transformer signal processing unit 1062.

As illustrated in Fig. 15(A), the portion that performs signal processing includes the scale signal processing unit 1061, the differential transformer signal processing unit 1062, and a correction processing unit 1570.

The scale signal processing unit 1061 has the configuration illustrated in Fig. 10(B) and, as in the first to fourth embodiments, processes the detection signal output from the scale detector 114, generates the first displacement data, and outputs it to the correction processing unit 1570. The first displacement data is used to correct the linearity of the second displacement data output from the differential transformer signal processing unit 1062. A correction is made using a displacement component of the scale signal in a long distance, that is, a long-period (long-wavelength) component in terms of distance and time. Hence, as in the first to fourth embodiments, a displacement component in a short distance, that is, a short-period (short-wavelength) component is not required. Accordingly, components equal to or less than a predetermined wavelength are removed.

The differential transformer signal processing unit 1062 processes the detection signal output from the displacement sensor 112, generates the second displacement data, and outputs it to the correction processing unit 1570. As in the first to fourth embodiments, the differential transformer signal processing unit 1062 has the configuration illustrated in Fig. 10(C). The differential transformer signal processing unit 1062 can perform a similar process to one that is conventionally performed, on the detection signal output from the displacement sensor 112 and output displacement data similar to the conventional one as the second displacement data. However, linearity is corrected based on the first displacement data output from the scale signal processing unit 1061, in other words, a long-period (long-wavelength) component is corrected. Therefore, the second displacement data is not required. Hence, in the fifth embodiment, the long-period (long-wavelength) component is desired to be removed.

In the fifth embodiment, as illustrated in Fig. 15(B), the differential transformer signal processing unit 1062 performs the A/D conversion process 1066 that causes a conversion into a digital signal, on the differential transformer signal being the detection signal output from the displacement sensor 112. The differential transformer signal processing unit 1062 further performs, on the digital signal, the second filtering process 1067 that removes distortion, noise, and the like of the stylus 110. The differential transformer signal processing unit 1062 then performs a third filtering process 1568 that removes components equal to or more than a wavelength corresponding to an interval between correction points to generate the second displacement data. The second filtering process 1067 is, for example, the same process as that of Fig. 10(C). In the third filtering process 1568, components equal to or more than a wavelength of, for example, 0.08 mm, 0.25 mm, or 0.8 mm are removed. In other words, in the third filtering process 1568, a filtering process opposite to the first filtering process 1065 of Fig. 10(B) is performed. Therefore, in the fifth embodiment, the differential transformer signal processing unit 1062 performs a bandpass filtering process.

Furthermore, as described below, a short-wavelength component may be removed from the differential transformer signal in like manner with the scale signal to generate the correction data. In that case, as illustrated in Fig. 15(C), the A/D conversion process 1066 that causes a conversion into a digital signal is performed on the differential transformer signal. Furthermore, the first filtering process 1065 is performed on the digital signal. A process of generating data for correction is separately performed.

The correction processing unit 1570 corrects a long-period component of the second displacement data in such a manner as to match the first displacement data.

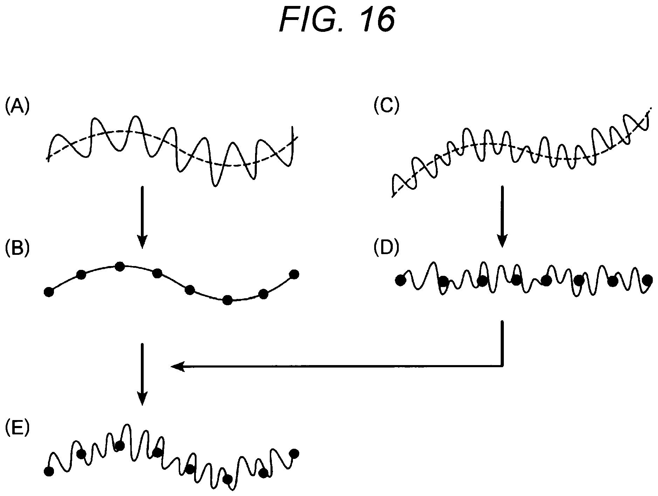

Fig. 16 is a diagram explaining signal processing and the correction process in the fifth embodiment.

Fig. 16(A) illustrates the scale signal output from the scale detector 114, or a digital signal obtained by A/D converting the scale signal. The first filtering process 1065 is performed on the signal to obtain the first displacement data where a short-wavelength component has been removed as illustrated in Fig. 16(B).

On the other hand, Fig. 16(C) illustrates the differential transformer signal output from the displacement sensor 112, or a digital signal obtained by A/D converting the differential transformer signal. The second filtering process 1067 and the third filtering process 1568 are performed on the signal to obtain the second displacement data where only an intermediate-wavelength component is left and the other short-wavelength and long-wavelength components have been removed as illustrated in Fig. 16(D).

The correction processing unit 1570 makes corrections in such a manner as to agree in displacement of the long wavelength between the first displacement data of Fig. 16(B) and the second displacement data of Fig. 16(D). Specifically, a correction is made to agree in height and inclination between the first displacement data of Fig. 16(B) and the second displacement data of Fig. 16(D) at each point. The corrections may be continuously made. Alternatively, discrete corrections may be made in such a manner as that values of correction points (indicated by black dots) of the second displacement data in Fig. 16(D) match values of correction points in Fig. 16(B). Consequently, corrected displacement data illustrated in Fig. 16(E) is obtained.

In the correction, it is required to obtain long-wavelength components of the scale signal and the differential transformer signal. Hence, a later displacement signal at the correction position is also required to be sampled to some extent. Furthermore, a computing process requires a little time. Hence, the correction data is real time, but is output with some time delay.

In the above example, the long-wavelength component is generated by the filtering process on the scale signal. It is also possible to generate the contour shape data where steps have been removed by a moving average of displacement data obtained by A/D converting the scale signal, a least squares line or spline of previous data on the predetermined number of samples, or the like.

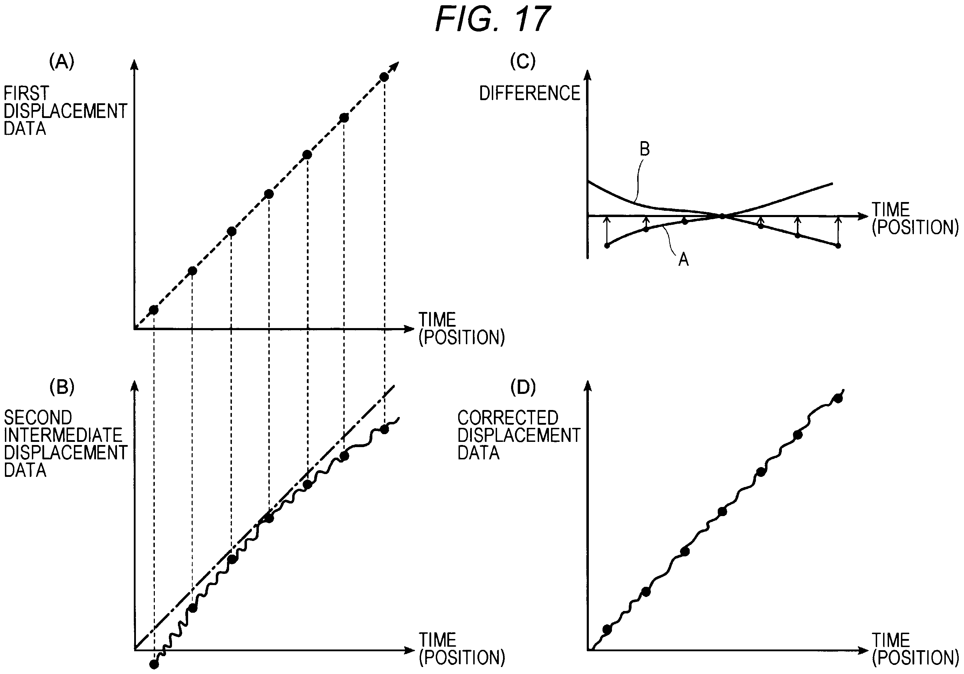

Fig. 17 is a diagram further explaining signal processing and the correction process. The diagrams are diagrams that give a description taking, as an example, a case where first correction data (the scale signal) simply increases such as a case where a gradually inclined flat surface is measured.

As illustrated in Fig. 17(A), the value of the first displacement data (the scale signal) increases linearly. In contrast, as illustrated in Fig. 17(B), in terms of the differential transformer signal before the third filtering process 1568 is performed, its average value agrees with the first displacement data near the middle point, but has a smaller value than the first variation data in regions on both sides. In this case, for example, as illustrated in Fig. 15(C), when the first filtering process is performed on the differential transformer signal, then the change of the average value illustrated in Fig. 17(B) is obtained. When a difference between the value obtained by performing the first filtering process on the differential transformer signal, and the first displacement data is calculated, the result is a change indicated by A in Fig. 17(C). When the sigh A is inversed, correction data indicated by B is obtained. The correction data is added to the second displacement data to obtain corrected displacement data illustrated in Fig. 17(D).

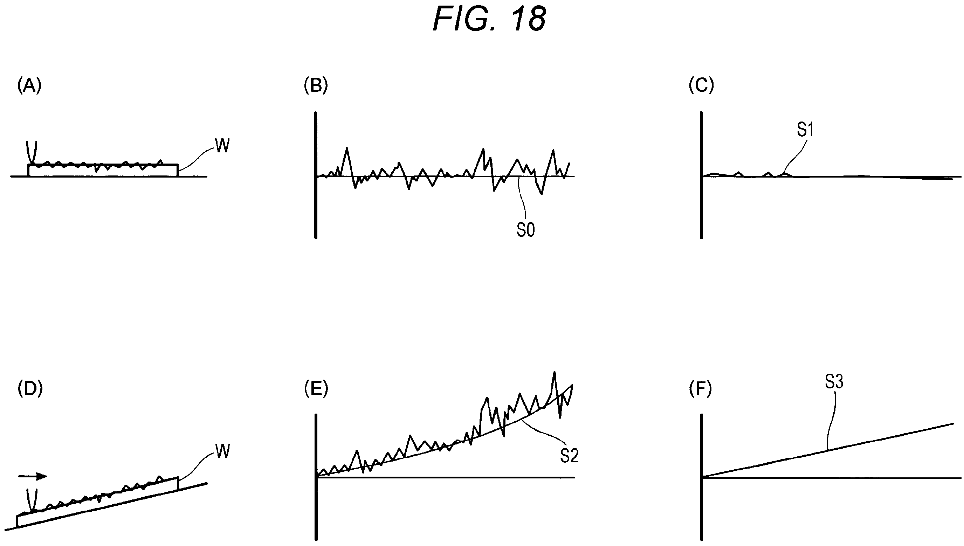

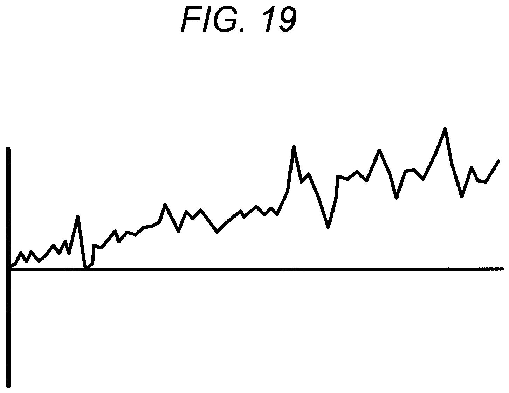

Fig. 18 and Fig. 19 are diagrams illustrating specific measurement examples in the fifth embodiment.

The work W targeted for measurement has a flat surface, and has roughness to some extent, as illustrated in Fig. 18(A). Fig. 18(B) illustrates the differential transformer signal or second displacement data measured in a state of holding the work W horizontally. Fig. 18(C) illustrates the scale signal or first displacement data measured in a state of holing the work W horizontally.

Fig. 18(D) illustrates a state of inclining and holding the work W. Fig. 18(E) illustrates the differential transformer signal or second displacement data measured in a state of inclining and holding the work W. Fig. 18(F) illustrates the scale signal or first displacement data measured in a state of inclining and holding the work W.

As illustrated in Fig. 18(B), a least squares line S0 of the second displacement data related to the measurement of the work W held horizontally agrees with a reference line indicating the zero level. Similarly, as illustrated in Fig. 18(C), a least squares line S1 of the first displacement data related to the measurement of the work W held horizontally also agrees with the reference line. As illustrated in Fig. 18(E), a least squares line S2 of the second displacement data related to the measurement of the work W inclined and held has an angle corresponding to the angle of inclination with respect to the reference line but is not a perfect straight line. As illustrated in Fig. 18(F), a least squares line S3 of the first displacement data related to the measurement of the work W inclined and held is a straight line having an angle corresponding to the angle of inclination with respect to the reference line.

The correction processing unit 1570 generates correction data in such a manner as that the least squares line S2 of Fig. 18(E) agrees with the least squares line S3 of Fig. 18(F). The first displacement data corrected by the correction data is as illustrated in Fig. 19. Consequently, a surface roughness signal having high linearity in a wide range is obtained.

As described above, continuous correction data may be calculated. However, the long-wavelength component is corrected. Accordingly, a problem will not arise even if corrections are discretely made. Hence, for example, in Figs. 17(A) to 17(D), only the correction points indicated by the black dots are corrected in such a manner as that the first correction data agrees with the second correction data, and also a correction may be linearly made between correction points. An interval between correction points is determined in such a manner as that deviation of linearity of the differential transformer signal in the interval is equal to or less than a predetermined value (a narrow-range error).

Specifically, the scale signal is read at intervals of a constant pitch, and inclination of each pitch is obtained. Furthermore, the differential transformer signal is divided by the pitch interval. Multiply by a coefficient in order that an average inclination between pitches of the differential transformer signal agrees with the inclination of each pitch of the scale signal. The average inclination between pitches of the differential transformer signal is calculated by, for example, a least squares line or spline. The two pieces of data are superimposed in such a manner as that end points between pitches agree with each other to calculate the corrected displacement data.

In another method for the real-time output, a difference in long-wavelength component between the displacement sensor 112 and the scale detection mechanism is measured in advance. The difference measured by the correction processing unit 1570 is stored as the correction data. The correction data is added to the second displacement data output from the differential transformer signal processing unit 1062 to generate the corrected displacement data. The measurement of the difference in long-wavelength component between the displacement sensor 112 and the scale detection mechanism is desired to be conducted at any time to update the correction data.

The method for generating correction data continuously and the method for generating correction data discretely, which are previously described in Fig. 17, can be applied to the measurement of the difference in long-wavelength component between the displacement sensor 112 and the scale detection mechanism. However, the measurement does not need to be conducted in real time. Hence, it is possible to obtain highly accurate correction data by taking time. Moreover, the difference in long-wavelength component between the displacement sensor 112 and the scale detection mechanism may be calculated based on data of the previous measurement to update the correction data.

When the correction data is stored, measurement data over the entire detection range needs to be stored. Hence, for example, an inclined surface of a work with excellent straightness is measured in advance to generate the scale signal and the differential transformer signal, which are illustrated in Figs. 15(A) and 15(B). A process of leaving only the long-wavelength component is performed on both of them. A difference between the two pieces of data is calculated. A polynomial that approximates the difference for the value of the differential transformer signal is calculated based on the calculated difference, and stored. Alternatively, a lookup table where the difference is mapped for the value of the differential transformer signal is created and stored. When measurement is actually conducted, the stored polynomial is used for the value of the differential transformer signal to calculate the difference. Alternatively, the difference stored in the lookup table for the value of the differential transformer signal is read. The difference is added to the value of the differential transformer signal to calculate the corrected displacement data.

Also if the corrected displacement data is not generated in real time, but is generated after the movement of the stylus 110 over the entire measurement range is finished, a similar process to the above process can be applied. There is sufficient time for processing. Accordingly, a more highly accurate process can be performed.

If corrections are discretely made at correction points, the scale signal is simply required to be able to detect displacement at the correction point with high accuracy. Hence, in a case of, for example, an optical scale detection mechanism, a black and white pattern does not need to exist continuously, but is simply required to exist corresponding to the correction points.

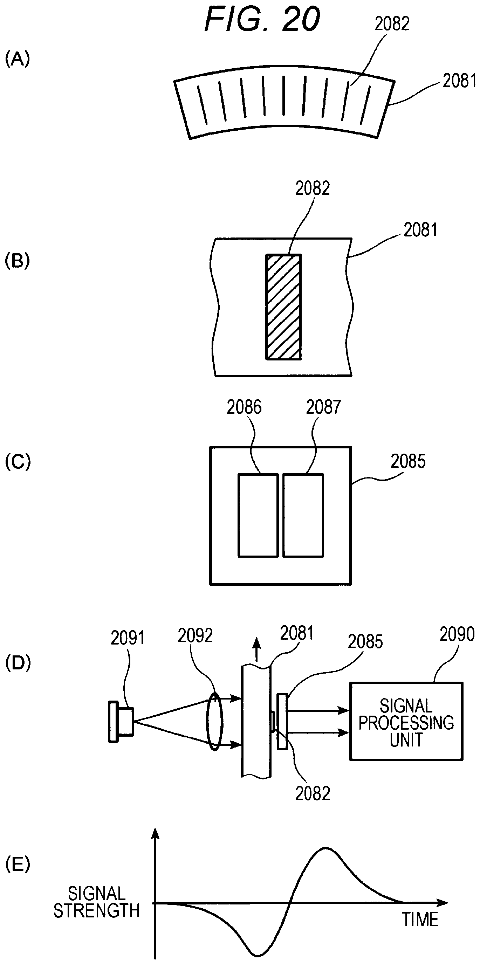

Fig. 20 is a diagram illustrating an example of an optical scale detection mechanism that detects displacement discretely with high accuracy.

As illustrated in Fig. 20(A), a plurality of black lines 2082 is radially formed, spaced on a scale 2081 with the support unit 102 at the center. Fig. 20(B) is a diagram illustrating one black line 2082 and its vicinity is transparent.

Fig. 20(C) illustrates a light receiving device 2085. The light receiving device 2085 is a two-segment light receiving device, and includes two light receiving units 2086 and 2087 that have the same shape and the same characteristics.

As illustrated in Fig. 20(D), a detection unit is provided in such a manner as to sandwich the scale 2081. The detection unit includes a light source 2091, a lens 2092 that makes light from the light source 2091 parallel, the light receiving device 2085 provided close to a side, where the black lines 2082 are formed, of the scale 2081, and a signal processing unit 2090 that processes a signal of the light receiving device 2085. The signal processing unit 2090 includes an analog circuit. The analog circuit computes a difference between output signals of the two light receiving units 2086 and 2087 of the light receiving device 2085.

As illustrated in Fig. 20(E), when there are no black lines 2082 in front of the two light receiving units 2086 and 2087, outputs of the two light receiving units 2086 and 2087 have the same strength. The differential signal becomes zero. When the black line 2082 starts overlapping with one of the two light receiving units 2086 and 2087, the output of the one of the two light receiving units 2086 and 2087 decreases. The differential signal starts, for example, decreasing. When the black line 2082 overlaps with the one of the two light receiving units 2086 and 2087, the differential signal becomes a minimum. When the scale 2081 is further moved, the overlap with the one of the two light receiving units 2086 and 2087 decreases to increase the output. On the other hand, overlapping with the other starts. Accordingly, the output of the other decreases to increase the differential signal dramatically. When the scale 2081 overlaps equally with the two light receiving units 2086 and 2087, the differential signal becomes zero. When the black line 2082 moves further and overlaps with the other of the two light receiving units 2086 and 2087, the differential signal becomes a maximum, and then decreases to zero. Therefore, a zero crossing can be determined with high accuracy. The point is set as the correction point. The position of the zero crossing of the signal is calibrated in advance for the scale 2081 formed with the black lines 2082. Accordingly, the absolute displacement of the correction point can be correctly obtained.

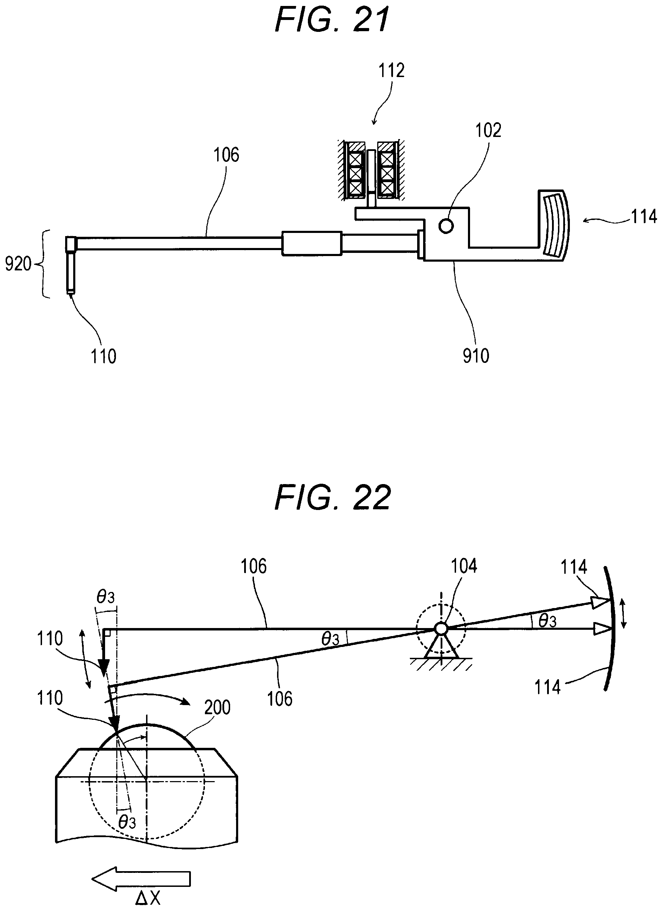

The positions of the displacement sensor 112 and the scale detector 114 with respect to the holder 910 and the gauge head 920 can be freely set. For example, in Fig. 9, the displacement sensor 112 and the scale detector 114 are provided opposite to the gauge head 920 with respect to the support unit 102. However, as illustrated in Fig. 21, the displacement sensor 112 can also be provided on the same side as the gauge head 920. Consequently, the turning moments of the two sensors on the support unit 102 can be reduced. Accordingly, the mass for causing the gauge head 920 to have a specified measurement pressure can be reduced. As a result, the mass of a swing unit rotatably supported at a fulcrum is reduced to enable an improvement in responsivity.

Up to this point the embodiments have been described. However, needless to say, various modifications can be made.

For example, those of various forms and shapes can be used as the scale detector 114. Various modifications of signal processing are also possible.

<Calibration Method/Calibration System>

Next, another embodiment of the present invention is described. The shape measuring instrument of the present invention can also be used as a shape measurement/calibration apparatus described below. The shape measurement/calibration apparatus is a calibration apparatus for contour shape measurement that measures a contour shape, and can also measure the shape of a to-be-measured object. This is described with reference to the drawings.

As illustrated in Fig. 22 (a conceptual diagram of the shape measurement/calibration apparatus), the shape measurement/calibration apparatus is configured mainly including an arc-shaped or spherical calibration jig 200, the stylus 110 that comes into contact with a surface of the calibration jig 200, a feed mechanism (not illustrated) that slides the calibration jig 200 relatively to the stylus 100, the arm 106 that has the stylus 100 at one end, conveys the displacement of the stylus 110, and rotates about the fulcrum 104, and the scale detector 114, at least part of which is mounted on the arm 106.

The shape measurement/calibration apparatus can also be configured by including the calibration jig 200 in the embodiment of the present invention illustrated in Fig. 1.

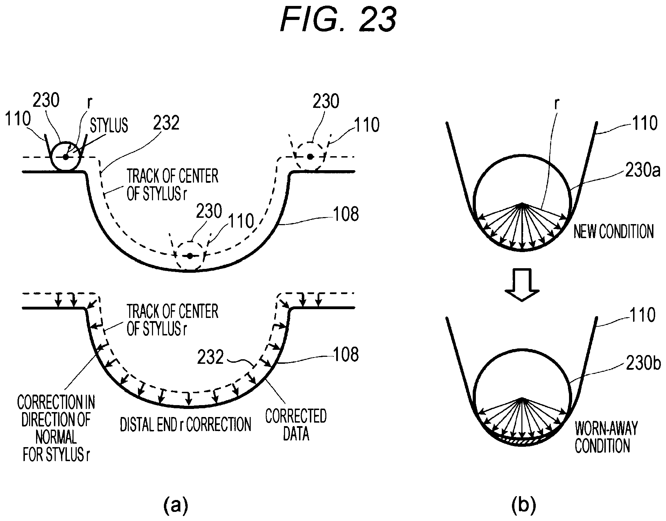

Firstly, a description is given of how the shape measuring machine and the shape measurement/calibration apparatus of the present invention (which include all the embodiments of the present invention: hereinafter simply collectively referred to as the shape measuring apparatus) measure a to-be-measured object and correct the measurement result, with reference to Fig. 23 (explanatory diagram for explaining methods for measuring a surface shape of a to-be-measured object and correcting the measurement data). An upper diagram in Fig. 23(a) is a diagram representing a state where the stylus 110 traces over the surface of the to-be-measured object 108. A dotted line indicated by a symbol 232 indicates a track of the center of a spherical portion 230 at the distal end of the stylus 110.

As illustrated in the upper diagram of Fig. 23(a), the stylus 110 moves in the horizontal direction while in contact with the surface of the to-be-measured object. Accordingly, the shape measuring apparatus captures, as data, the track 232 of the center of the spherical portion 230 of the stylus 110. The spherical portion 230 is preferably a shape close to a sphere, and is formed in such a manner as to become closer to a sphere. In the spherical portion 230, only a portion exposed to a surface that comes into contact with the to-be-measured object 108 is required to be a shape close to a sphere.

Here, the track 232 is a track of the center of the spherical portion 230 and accordingly is located a distance equal to a radius r of the spherical portion 230 away from the surface of the to-be-measured object. Hence, the shape measuring apparatus makes a correction only for the distance equal to the radius r. As illustrated in a lower diagram of Fig. 23(a), the correction method is to set, as the surface shape of the to-be-measured object, points located after moving the points of the track 232 by the distance r in the directions of the normals to tangents of the points.

Consequently, the surface shape of the to-be-measured object can be obtained extremely correctly. However, as illustrated in Fig. 23(b), conventionally, a spherical portion 230a in new condition wears away from use and accordingly changes to a worn-away spherical portion 230b deviating from the spherical shape. The radius of the spherical portion 230b becomes uneven. Errors due to variations of the radius are caused upon correction. Moreover, also in new condition, again, the spherical portion 230 has some deviation from a sphere and accordingly has errors caused by the variations of the radius r.

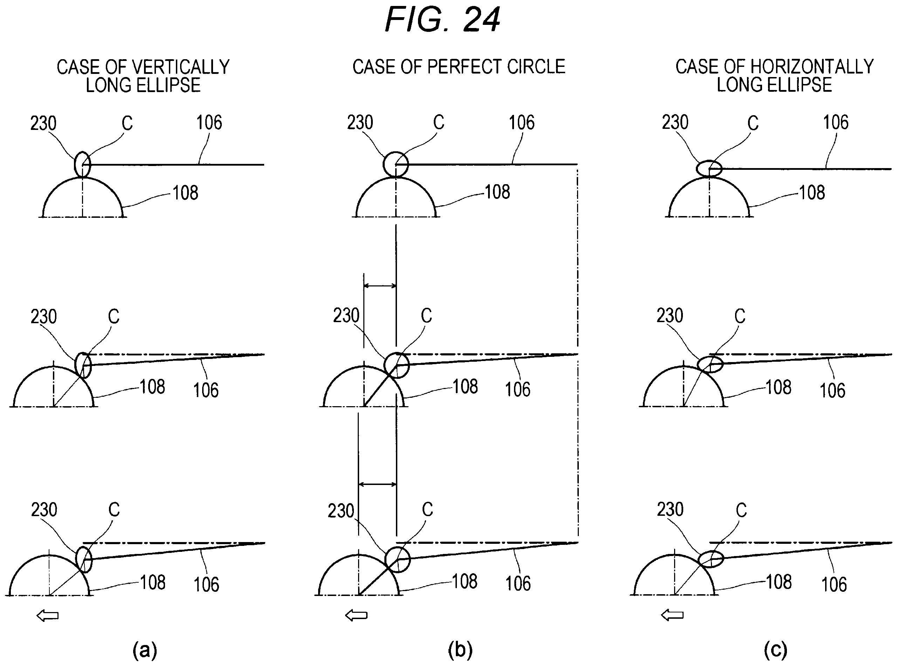

The influence of the variations of the radius r is described with reference to Fig. 24. Fig. 24 is a diagram illustrating a difference in distance between a spherical portion center C and a contact point in accordance with the shape of the spherical portion 230. In Fig. 24, (a) illustrates a case where the spherical portion 230 has a vertically long elliptical shape, (b) illustrates a case where the spherical portion 230 is a perfect circle, and (c) illustrates a case where the spherical portion 230 has a horizontally long elliptical shape.

Referring to (a), it can be seen that when the spherical portion 230 comes into contact with the to-be-measured object 108 and continues to move on the to-be-measured object 108 while in contact with it, the distance (the radius r) between the center C of the spherical portion 230 and the contact point between the spherical portion 230 and the to-be-measured object 108 is gradually reduced from the upper diagram toward the lower diagram. In this manner, in the case where the spherical portion 230 is a vertically long ellipse, the distance (the radius r) between the center C and the contact point decreases as the contact position with the to-be-measured object 108 approaches the side of the spherical portion 230.

Next, referring to (c), on the contrary, in the case where the spherical portion 230 has a horizontally long elliptical shape, the distance (the radius r) between the center C and the contact point gradually increases as the contact position with the to-be-measured object 108 approaches the side of the spherical portion 230. In (b) where the spherical portion 230 is a perfect circle, the distance (the radius r) between the contact point and the center C is constant even if any part of the spherical portion 230 comes into contact with the to-be-measured object 108.

As described above, the present inventors and the like found the cause of the occurrence of an error due to a change in shape of the spherical portion 230 at the distal end of the stylus 110 as a result of a diligent study and further, invented a method for reducing the error. The method for reducing the error is described below.

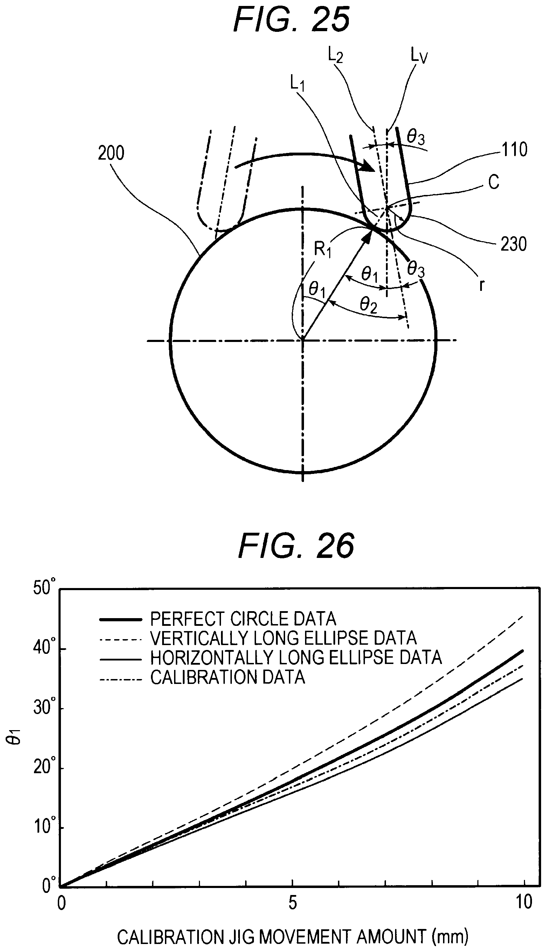

The description is given with reference to Fig. 25. Fig. 25 is a diagram illustrating an angle formed by the spherical calibration jig 200 and the stylus 110 having the spherical portion 230 in contact with the calibration jig 200. As illustrated in the figure, $\theta_1$ to $\theta_3$ represent the angles indicated below:

- $\theta_1$: the angle formed by the vertical direction (a straight line $L_v$) and a straight line $L_1$ passing the center C of the spherical portion 230 and a point of the spherical portion 230 in contact with the calibration jig 200

- $\theta_2$: the angle formed by a straight line $L_2$ passing the center C of the spherical portion 230 and being parallel to a longitudinal direction of the stylus, and the straight line $L_1$
- $\theta_3$: the angle formed by the vertical direction (the straight line $L_v$) and the straight line $L_2$
- The radius of the calibration jig 200 is $R_1$.
- The radius of the spherical portion 230 is r.

Here, the straight line L2 is perpendicular to the arm 106. Moreover, $\theta_3$ is the same as the angle of the arm 106 with respect to the horizontal direction as illustrated in Fig. 22. This is a matter of elementary geometry, and is clear. Accordingly, its proof is omitted. Moreover, it can be seen from Fig. 25 that $\theta_2 = \theta_1 + \theta_3$.

Next, the calibration method is described. The shape measuring apparatus measures the shape of the surface of the calibration jig 200 forming a sphere as illustrated in Figs. 22 and 25. The measurement is conducted by bringing the spherical portion 230 at the distal end of the stylus 110 into contact with the surface of the calibration jig 200, and moving the stylus 110 and the calibration jig 200 relatively to the horizontal direction.

At this point in time, the shape measuring apparatus associates and stores a horizontal travel distance x, vertical displacement of the stylus 110, and the value of the rotation angle $\theta_3$ of the arm caused by the vertical movement of the stylus 110 (Fig. 22). Next, the track 232 illustrated in Fig. 23 is obtained from the horizontal travel distance x and the vertical displacement of the stylus 110. The direction of the normal to a tangent at each point of the track 232 is obtained to obtain $\theta_1$ being the angle formed by the direction of the normal and the vertical direction.

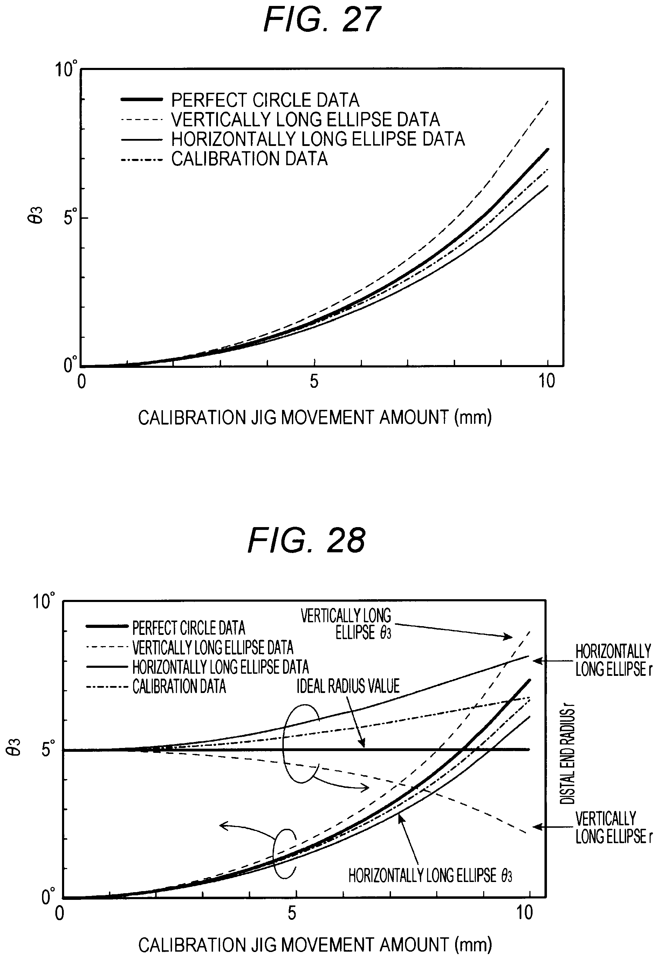

Consequently, data illustrated in Figs. 26 and 27 can be obtained. Fig. 26 is a graph illustrating the relationship between the movement amount of the calibration jig (a relative movement amount between the calibration jig and the stylus 110) and $\theta_1$. Fig. 27 is a graph illustrating the relationship between the movement amount of the calibration jig (a relative movement amount between the calibration jig and the stylus 110) and $\theta_3$.

Both Figs. 26 and 27 describe, as previously known data, data measured using the distal end portion 230 of which cross section is a perfect circle (described as the perfect circle data), data measured using the distal end portion 230 of which cross section is a vertically long ellipse (described as the vertically long ellipse data), and data measured using the distal end portion 230 of which cross section is a horizontally long ellipse (described as the horizontally long ellipse data).

The cross section referred to above indicates a cross section of the distal end portion 230 cut along the surface of rotation of the arm 106. These sets of data are known data obtained using those with known shapes of a perfect circle, a vertically long ellipse, and a horizontally long ellipse. The results of measurements of a spherical calibration jig of a known size using the shape measuring apparatus targeted for calibration (or the stylus 110 targeted for calibration) are illustrated as the calibration data.

Here, referring to Figs. 26 and 27, the calibration data measured this time is located between the perfect circle data and the horizontally long ellipse data. This is illustrated as an example. In reality, the position of data changes depending on the shape of the spherical portion 230 at the distal end of the calibration target stylus 110.

Next, a description is given with reference to Fig. 28 (a graph illustrating the movement amount of the calibration jig and the radius of the spherical portion 230). It can be seen from the graphs obtained in Figs. 26 and 27, the shape of the spherical portion 230 targeted for calibration is between the perfect circle and the horizontally long ellipse. Consequently, the radius r of the distal end of the spherical portion 230 targeted for calibration should be between the horizontally long ellipse data and the perfect circle data. Therefore, in Fig. 28, a curve is drawn as the calibration data between the horizontally long ellipse data and the perfect circle data.

In terms of the way to draw the curve, the curve may be drawn in such a manner as to be placed in the middle between the horizontally long ellipse data and the perfect circle data. Alternatively, what percent the calibration data is closer to which of the perfect data and the horizontally long data may be obtained from the data in Figs. 26 and 27 to draw a curve placing it to one side in accordance with the ratio. Moreover, Figs. 26 to 28 describe only three types of known data. The number of types of known data is increased; accordingly, it is possible to check between which sets of known data the calibration data is located, and obtain the position of a curve of the calibration data in Fig. 28 based on the result. Hence, it is possible to draw a curve of the calibration data more correctly, and estimate the radius of the spherical portion 230 targeted for calibration more correctly.

Next, the relationship between the movement amount of the calibration jig, and $\theta_1$ and $\theta_3$ can be found from Figs. 26 and 27. Accordingly, in Fig. 28, data where the movement amount of the calibration jig of the horizontal axis is changed to $\theta_2$ is obtained. $\theta_2 = \theta_1 + \theta_3$. Therefore, it can be obtained easily. The obtained data of $\theta_2$ is used as the calibration data for each measurement of the to-be-measured object to correct a measurement value. Accordingly, even if the spherical portion 230 is not a spherical shape, a correction can be made with high accuracy.

This is described with reference to Fig. 23. The to-be-measured object is measured to obtain the track 232 of the center of the spherical portion 230 (Fig. 23(a)). Next, for each point of the track 232, the direction of the normal to a tangent of the point is obtained. $\theta_1$ is obtained from the direction of the normal. $\theta_3$ is obtained from the angle of the arm 106 at the time of the measurement of the point.

$\theta_2$ can be obtained from $\theta_1$ and $\theta_3$. Hence, in the graph of Fig. 28, the radius r of the distal end of the spherical portion 230 is obtained at corresponding $\theta_2$ from the data obtained by converting the horizontal axis to $\theta_2$. As illustrated in the lower diagram in Fig. 23(a), the position of the point that has been moved a distance equal to r in the direction of the normal from the measurement point is obtained. This is performed for all the points of the track 232 to set them as the surface shape of the to-be-measured object. Accordingly, it is possible to obtain a highly accurate surface shape of the to-be-measured object where variations of the radius of the distal end of the spherical portion 230 has been corrected.

DESCRIPTION OF REFERENCE SIGNS

| | |
|---|---|
| 100 | Shape measuring machine |
| 102 | Support unit |
| 104 | Fulcrum |
| 106 | Arm |
| 108 | To-be-measured object |
| 110 | Stylus |
| 112 | Displacement sensor |
| 114 | Scale detector |
| 116 | First end |
| 118 | Second end |
| 120 | Core |
| 122 | Coil |
| 200 | Calibration jig |
| 230 | Spherical portion |
| 230a | Spherical portion |
| 230b | Spherical portion |
| 232 | Track |
| 300 | Distal end surface |
| 302 | Scale |
| 304 | Scale reading unit |
| 306 | Light emitting unit |
| 308 | Light receiving unit |
| 402 | Ball gauge |
| 421 | Block |
| 423 | Ball |
| 502 | Step gauge |
| 531 | Reference base |
| 532 | Block gauge |
| 900 | Shape measuring machine |
| 910 | Holder |
| 920 | Gauge head |
| 1061 | Scale signal processing unit |
| 1062 | Differential transformer signal processing unit |
| 1064 | A/D conversion process |
| 1065 | First filtering process |
| 1066 | A/D conversion process |
| 1067 | Second filtering process |
| 1153 | Measuring stand |
| 1263 | Selection unit |
| 1369 | Selection control unit |
| 1568 | Third filtering process |
| 1570 | Correction processing unit |
| 2081 | Scale |
| 2082 | Black line |
| 2085 | Light receiving device |
| 2086 | Light receiving unit |

2087    Light receiving unit
2090    Signal processing unit
2091    Light source
2092    Lens

**Claims**

1.  A shape measuring machine (100) for measuring a contour and a roughness shape of a surface of a to-be-measured object, comprising:

    an arm (106) configured to rotate with a support unit (102) as a fulcrum (104);
    a stylus (110) configured to be brought into contact with the to-be-measured object, be displaced up and down following a surface shape of the to-be-measured object, and be mounted at one end of the arm (106), and
    a displacement sensor (112) and a scale detector (114) which are provided at the arm (106) to detect displacement of the arm (106) by displacement of the stylus (110), wherein
    the shape measuring machine (100) further comprises a correction processing unit (1570) configured to correct the linearity of the data of the displacement sensor (112) by data of the scale detector (114), wherein the shape measuring machine (100) is configured to generate the corrected displacement data after the movement of the stylus (110) over the entire measurement range is finished.

2.  The shape measuring machine (100) according to claim 1, wherein both of the displacement sensor (112) and the scale detector (114) are configured to simultaneously measure the displacement of the arm (106).

3.  The shape measuring machine (100) according to claim 1 or 2, wherein the correction processing unit (1570) is configured to create correction data in such a manner as that a long-period component of the data of the displacement sensor (112) agrees with a long-period component of the data of the scale detector (114), and is configured to correct the linearity of the data of the displacement sensor (112) based on the correction data.

**Patentansprüche**

1.  Formmessvorrichtung (100) zum Messen einer Kontur und einer Rauheitsform einer Oberfläche eines zu messenden Objekts, umfassend:

    einen Arm (106), der konfiguriert ist, um sich mit einer Stützeinheit (102) als Drehpunkt (104) zu drehen;
    einen Stift (110), der konfiguriert ist, um mit dem zu messenden Objekt in Kontakt gebracht zu werden, um gemäß einer Oberflächenform des zu messenden Objekts nach oben und unten verschoben zu werden und um an einem Ende des Arms (106) angebracht zu werden, und
    einen Verschiebungssensor (112) und einen Skalendetektor (114), die am Arm (106) bereitgestellt sind, um anhand einer Verschiebung des Stifts (110) eine Verschiebung des Arms (106) zu erfassen, wobei
    die Formmessvorrichtung (100) ferner eine Korrekturverarbeitungseinheit (1570) umfasst, die konfiguriert ist, um die Linearität der Daten des Verschiebungssensors (112) anhand von Daten des Skalendetektors (114) zu korrigieren, wobei die Formmessvorrichtung (100) konfiguriert ist, um die korrigierten Verschiebungsdaten zu erzeugen, nachdem die Bewegung des Stifts (110) über den gesamten Messbereich abgeschlossen ist.

2.  Formmessvorrichtung (100) nach Anspruch 1, wobei sowohl der Verschiebungssensor (112) als auch der Skalendetektor (114) konfiguriert sind, um gleichzeitig die Verschiebung des Arms (106) zu messen.

3.  Formmessvorrichtung (100) nach Anspruch 1 oder 2, wobei die Korrekturverarbeitungseinheit (1570) konfiguriert ist, um Korrekturdaten so zu erzeugen, dass eine Langzeitkomponente der Daten des Verschiebungssensors (112) mit einer Langzeitkomponente der Daten des Skalendetektors (114) übereinstimmt, und sie konfiguriert ist, um die Linearität der Daten des Verschiebungssensors (112) auf der Grundlage der Korrekturdaten zu korrigieren.

**Revendications**

1.  Dispositif de mesure de forme (100) servant à mesurer un contour et une forme de rugosité d'une surface d'un objet à mesurer, comprenant :

un bras (106) conçu pour tourner avec une unité de support (102) en guise de point d'appui (104) ;
un palpeur (110) conçu pour être mis en contact avec l'objet à mesurer, déplacé vers le haut et vers le bas suivant une forme de la surface de l'objet à mesurer et monté à une extrémité du bras (106) ; et
un capteur de déplacement (112) et un détecteur d'échelle (114) qui sont disposés au niveau du bras (106) pour détecter le déplacement du bras (106) par déplacement du palpeur (110),
le dispositif de mesure de forme (100) comprenant en outre une unité de traitement de correction (1570) conçue pour corriger la linéarité des données du capteur de déplacement (112) par des données du détecteur d'échelle (114), le dispositif de mesure de forme (100) étant conçu pour générer les données de déplacement corrigées une fois le mouvement du palpeur (110) sur l'ensemble de la plage de mesure terminé.

2. Dispositif de mesure de forme (100) selon la revendication 1, dans lequel le capteur de déplacement (112) et le détecteur d'échelle (114) sont conçus pour mesurer simultanément le déplacement du bras (106).

3. Dispositif de mesure de forme (100) selon la revendication 1 ou 2, dans lequel l'unité de traitement de correction (1570) est conçue pour créer des données de correction de manière à ce qu'une composante de longue période des données du capteur de déplacement (112) concorde avec une composante de longue période des données du détecteur d'échelle (114) et est conçue pour corriger la linéarité des données du capteur de déplacement (112) sur la base des données de correction.

## FIG. 1

## FIG. 2

# FIG. 3

(A)                                                                    (B)

# FIG. 4

## FIG. 5

## FIG. 6

## FIG. 7

## FIG. 8

# FIG. 9

# FIG. 10

(A)

1061

SCALE SIGNAL
PROCESSING UNIT

→ FIRST
DISPLACEMENT
DATA

1062

DIFFERENTIAL
TRANSFORMER SIGNAL
PROCESSING UNIT

→ SECOND
DISPLACEMENT
DATA

(B)

1064                          1065

SCALE SIGNAL → A/D → FIRST
FILTERING
PROCESS → FIRST
DISPLACEMENT
DATA

(C)

1066                          1067

DIFFERENTIAL
TRANSFORMER → A/D → SECOND
SIGNAL              FILTERING
PROCESS → SECOND
DISPLACEMENT
DATA

# FIG. 11

(A)

(B)

(C)

SCALE READ VALUE

BLOCK GAUGE HEIGHT

## FIG. 12

```
                              FIRST
                              DISPLACEMENT
     1061                     DATA
                                                1263
┌──────────────────┐                     ┌──────────────┐
│  SCALE SIGNAL    │─────────────────────→│              │  DETECTION
│ PROCESSING UNIT  │                      │  SELECTION   │─────→ DATA
└──────────────────┘                      │    UNIT      │
     1062                           ┌────→│              │
┌──────────────────┐               │     └──────────────┘
│  DIFFERENTIAL    │               │            ↑
│TRANSFORMER SIGNAL│───────────────┘
│ PROCESSING UNIT  │                          SELECTION
└──────────────────┘         SECOND            SIGNAL
                             DISPLACEMENT
                             DATA
```

## FIG. 13

```
(A)                           FIRST
                              DISPLACEMENT
     1061                     DATA               1263
┌──────────────────┐                     ┌──────────────┐
│  SCALE SIGNAL    │──────────●──────────→│              │  DISPLACEMENT
│ PROCESSING UNIT  │          │      ┌───→│  SELECTION   │─────→ DATA
└──────────────────┘          │      │    │    UNIT      │
     1062                      │      │    └──────────────┘
┌──────────────────┐          │      │           ↑        1369
│  DIFFERENTIAL    │          │      │    ┌──────────────┐
│TRANSFORMER SIGNAL│────●─────┼──────┼───→│  SELECTION   │
│ PROCESSING UNIT  │    │     └──────┼───→│ CONTROL UNIT │
└──────────────────┘    │            │    └──────────────┘
                        SECOND
                        DISPLACEMENT
                        DATA
```

(B)

# FIG. 14

(A)

(C)

(B)

(D)

# FIG. 15

(A)

SCALE SIGNAL
PROCESSING UNIT  1061

FIRST
DISPLACEMENT
DATA

CORRECTION
PROCESSING UNIT  1570

CORRECTED
DISPLACEMENT
DATA

DIFFERENTIAL
TRANSFORMER SIGNAL
PROCESSING UNIT  1062

SECOND
DISPLACEMENT
DATA

(B)

DIFFERENTIAL
TRANSFORMER
SIGNAL → A/D  1066 → SECOND
FILTERING
PROCESS  1067 → THIRD
FILTERING
PROCESS  1568 → SECOND
DISPLACEMENT
DATA

(C)

DIFFERENTIAL
TRANSFORMER
SIGNAL → A/D  1066 → FIRST
FILTERING
PROCESS  1065 → DATA FOR
CORRECTION

FIG. 16

# FIG. 17

(A)

FIRST
DISPLACEMENT
DATA

TIME
(POSITION)

(C)

DIFFERENCE

B

A

TIME
(POSITION)

(B)

SECOND
INTERMEDIATE
DISPLACEMENT
DATA

TIME
(POSITION)

(D)

CORRECTED
DISPLACEMENT
DATA

TIME
(POSITION)

EP 3 346 228 B1

## FIG. 18

(A)

W

(B)

S0

(C)

S1

(D)

W

(E)

S2

(F)

S3

EP 3 346 228 B1

FIG. 19

# FIG. 20

(A)

2082

2081

(B)

2082

2081

(C)

2086    2087

2085

(D)

2091    2092    2081    2085    2090

SIGNAL
PROCESSING
UNIT

2082

(E)

SIGNAL
STRENGTH

TIME

## FIG. 21

## FIG. 22

# FIG. 23

(a)

(b)

## FIG. 24

CASE OF VERTICALLY LONG ELLIPSE

CASE OF PERFECT CIRCLE

CASE OF HORIZONTALLY LONG ELLIPSE

230  C  106
108

230  C  106
108

230  C  106
108

230  C
108  106

230  C
108  106

230  C
108  106

230  C
108  106

230  C
108  106

230  C
108  106

(a)

(b)

(c)

EP 3 346 228 B1

## FIG. 25

## FIG. 26

CALIBRATION JIG MOVEMENT AMOUNT (mm)

## FIG. 27

Legend:
- **PERFECT CIRCLE DATA**
- VERTICALLY LONG ELLIPSE DATA
- HORIZONTALLY LONG ELLIPSE DATA
- CALIBRATION DATA

Y-axis: $\theta_3$ (0° to 10°)

X-axis: CALIBRATION JIG MOVEMENT AMOUNT (mm) (0 to 10)

## FIG. 28

Legend:
- **PERFECT CIRCLE DATA**
- VERTICALLY LONG ELLIPSE DATA
- HORIZONTALLY LONG ELLIPSE DATA
- CALIBRATION DATA

Labels: VERTICALLY LONG ELLIPSE $\theta_3$, HORIZONTALLY LONG ELLIPSE r, IDEAL RADIUS VALUE, VERTICALLY LONG ELLIPSE r, HORIZONTALLY LONG ELLIPSE $\theta_3$

Y-axis: $\theta_3$ (0° to 10°); right axis: DISTAL END RADIUS r

X-axis: CALIBRATION JIG MOVEMENT AMOUNT (mm) (0 to 10)

## REFERENCES CITED IN THE DESCRIPTION

**Patent documents cited in the description**

- JP 4001850 B
- WO 2013103070 A
- US 2012234075 A
- US 2004027141 A
- DE 102007019833